# EUROPEAN PATENT APPLICATION

(11) **EP 4 773 675 A1**
(43) Date of publication of application: **08.07.2026**
(21) Application number: 24859219.8
(22) Date of filing: 19.07.2024
(51) Int. Cl.: H04W 48/10, H04W 36/00, H04W 48/16

(54) **AERIAL USER EQUIPMENT, RADIO ACCESS NETWORK NODE, AND METHODS THEREFOR**

(30) Priority: 30.08.2023 JP 2023139932
(71) Applicant: NEC Corporation, 108-8001 Tokyo (JP)
(72) Inventor: HAYASHI Satoaki, Tokyo 108-8001 (JP); HAYASHI Sadafuku, Tokyo 108-8001 (JP); CHEN Yuhua, Tokyo 108-8001 (JP)
(74) Representative: Mathys & Squire
(86) International application number: PCT/JP2024/025881
(87) International publication number: WO 2025/047175

(57) **Abstract**

An aerial User Equipment (UE) receives system information via broadcast in a first cell. The aerial UE does not treat the first cell as a barred cell in cell selection or cell reselection, if the system information does not contain first information indicating whether the first cell is barred to aerial UEs. For example, this could contribute to solving a problem regarding the implementation of a mechanism to allow aerial UEs to respect a no-transmit zone (NTZ).

## Description

### Technical Field

The present disclosure relates to radio communication systems, particularly to aerial User Equipments (UEs).

### Background Art

The 3rd Generation Partnership Project (3GPP (registered trademark)) Release 15 and subsequent releases support aerial User Equipment (UE) communication. In 3GPP Releases 15-17, the Evolved Universal Terrestrial Radio Access Network (E-UTRAN)-based mechanism providing Long Term Evolution (LTE) connections to UEs capable of aerial communication is supported through the following functionalities:
- Subscription-based aerial UE identification and authorization;
- Height reporting based on an event where the UE's altitude crossed a network-configured reference altitude threshold;
- Interference detection based on a measurement reporting that is triggered when a configured number of cells (i.e. larger than one) fulfil the triggering criteria simultaneously;
- Signalling of flight path information from UE to E-UTRAN;
- Location information reporting, including UE's horizontal and vertical velocity.

In 3GPP Release 18, functionality similar to the above is planned to be supported to provide New Radio (NR) communication to aerial UEs (see, for example, Non-Patent Literature 1-6).

The decision of the European Conference of Postal and Telecommunications Administrations (CEPT) Electronic Communications Committee (ECC) dated November 8, 2022, "ECC Decision (22)07" specifies out-of-band (OOB) emission limits specific to aerial UEs and technical conditions for no-transmit zones (NTZ) specific to aerial UEs (see Non-Patent Literature 7). An NTZ is a geographical area where aerial UEs are not allowed to operate in a specific frequency band to ensure coexistence with other radio systems and services, such as digital terrestrial television (DTT) receivers, radio astronomy service (RAS) sites, and radar sites. ECC Decision (22)07 requires that the no-transmit zones (NTZs) described in the Decision should be defined and enforced at the national level and coordinated with neighboring countries as necessary.

The coexistence conditions described in ECC Decision (22)07 are presented below. These coexistence conditions are developed under the assumption that there is a mechanism to differentiate between an aerial UE and a conventional UE and that this mechanism cannot be changed by the end-user. A mechanism is necessary to ensure that aerial UEs respect NTZs. In ECC Decision (22)07, the term aerial UE means a UE supporting Unmanned Aircraft Systems (UAS) features and services and requiring an aerial subscription. An aerial UE may be installed on an unmanned aircraft (e.g., drones) or a manned aircraft (e.g., helicopters, flying taxis, etc.).

For example, NTZs are required at heights up to 30 m above ground level for aerial UEs operating in 703-733 MHz to avoid interference to DTT receivers. In other words, an aerial UE operating in 703-733 MHz should not transmit at a height less than 30 m above ground level.

For example, nationally determined NTZs are required around RAS sites operating in 1400-1427 MHz for aerial UEs operating in the 703-718 MHz frequency band, as appropriate.

For example, nationally determined NTZs are required around RAS sites operating in 1660-1670 MHz for aerial UEs operating in the 832-837 MHz frequency band, as appropriate.

For example, nationally determined NTZs are required around RAS sites operating in 2690-2700 MHz for aerial UEs operating in the 2500-2570 MHz or 2570-2620 MHz frequency band, as appropriate.

For example, nationally determined NTZs might be required around radars operating in 2700-2900 MHz for aerial UEs operating in the 2500-2570 MHz or 2570-2620 MHz frequency band.

Non-Patent Literature 6 contains the following description of a mechanism for meeting the NTZ requirements specified in ECC Decision (22)07 of the CEPT ECC. If the NTZ is to be understood in a very strict manner, it would mean an aerial UE (e.g., Unmanned Aerial Vehicle (UAV)) should not perform initial access to a cell in the NTZ. In that case, an aerial UE may not even camp on such a cell. In contrast, in a less strict scenario, an aerial UE could access the cell but is steered to another cell for further transmissions. An aerial UE could see several cells and could potentially be served by a far-away cell even if the aerial UE itself would be in an NTZ or close to it. Yet another aspect to consider is the potential interference to neighbor cells. In a case where an aerial UE is in an NTZ but connected to another cell, the aerial UE may cause unwanted interference. The same applies if the aerial UE is close to an NTZ.

Two mechanisms are conceivable for an aerial UE to respect NTZs. One is a cell-level granularity mechanism, and the other is a finer-grained mechanism. At a cell-level granularity, the radio access network (RAN) node takes cell-level measures to bar aerial UEs from accessing NTZ-affected cells.

At a finer granularity, an aerial UE in Radio Resource Control (RRC)_CONNECTED mode notifies the RAN node when the UE is entering or leaving the NTZ. Signaling can be defined for an aerial UE in RRC_CONNECTED mode to notify the RAN node when it is entering an NTZ, allowing the network to be prepared to maintain the connectivity with the aerial UE (e.g., to switch to another frequency band or carrier that is allowed in the NTZ). Vice versa, knowing when an aerial UE is leaving an NTZ enables the network to recover to a previous mode of communication with the aerial UE. This may be needed, for example, to monitor interference caused by aerial UEs near the NTZ.

The first (cell-level) mechanism offers several advantages. First, it is applicable to UEs in both connected mode and idle mode. Second, it requires less work in the 3GPP Technical Specification Group (TSG) Radio Access Network (RAN) Working Group #2 (WG2) (RAN2). Specifically, only one bit in the system information broadcast by the network is needed to bar aerial UEs from accessing NTZ-affected cells.

Non-Patent Literature 6 proposes to specify signaling that allows cells NTZ-affected cells to prohibit access by aerial UEs.

### Citation List

### Non Patent Literature

[Non-Patent Literature 1] 3GPP TS 23.256 V18.1.0 (2023-06), "3rd Generation Partnership Project; Technical Specification Group Services and System Aspects; Support of Uncrewed Aerial Systems (UAS) connectivity, identification and tracking; Stage 2 (Release 18)", June 2023
[Non-Patent Literature 2] InterDigital, "Report from Session on NES, UAV, Rel-15-17 UP, Rel-17 Small Data, IIoT/URLLC, and RACH partitioning", R2-2306543, 3GPP TSG-RAN WG2 Meeting #122, Incheon, Korea, May 22-26, 2023
[Non-Patent Literature 3] Nokia, Nokia Shanghai Bell, "Stage-2 Text Proposal for Rel-18 UAVs", R2-2305886, 3GPP TSG-RAN WG2 Meeting #122, Incheon, Korea, May 22-26, 2023
[Non-Patent Literature 4] Ericsson, "UAV flight path reporting", R2-2305544, 3GPP TSG-RAN WG2 Meeting #122, Incheon, Korea, May 22-26, 2023
[Non-Patent Literature 5] Nokia, Nokia Shanghai Bell, "Further Details on Flight Path Plan (FPP)", R2-2305887, 3GPP TSG-RAN WG2 Meeting #122, Incheon, Korea, May 22-26, 2023
[Non-Patent Literature 6] Ericsson, "No-transmit zones for UAVs", RP-231203, 3GPP TSG RAN Meeting #100, Taipei, June 12-14, 2023
[Non-Patent Literature 7] European Conference of Postal and Telecommunications Administrations (CEPT), "Harmonised technical conditions for the usage of aerial UE for communications based on LTE and 5G NR in the bands 703-733 MHz, 832-862 MHz, 880-915 MHz, 1710-1785 MHz, 1920-1980 MHz, 2500-2570 MHz and 2570-2620 MHz harmonised for MFCN", ECC/DEC/(22)07, November 18, 2022

### Summary of Invention

### Technical Problem

The inventors examined mechanisms to address the NTZ requirements specified in ECC Decision (22)07 of the CEPT ECC and identified various issues. Some of these issues relate to improvements in cell selection or cell reselection to enable aerial UEs to respect NTZs. Non-Patent Literature 6 states that only one bit in the system information broadcast by the network is needed to bar aerial UEs from accessing NTZ-affected cells. However, Non-Patent Literature 6 does not disclose further details, and the procedures and signaling details enabling aerial UEs to respect NTZs remain insufficiently clear.

One of the objectives to be achieved by the example embodiments disclosed herein is to provide apparatuses, methods, and programs that contribute to solving at least one of a plurality of problems related to implementing mechanisms enabling aerial UEs to respect NTZs, including the problems described above. It should be noted that this objective is only one of the objectives to be achieved by the example embodiments disclosed herein. Other objectives or problems and novel features will become apparent from the following description and the accompanying drawings.

### Solution to Problem

In a first aspect, an aerial UE is configured to receive system information via broadcast in a first cell. The aerial UE is configured to treat the first cell as a barred cell in cell selection or cell reselection, if the system information contains first information indicating whether the first cell is barred to aerial UEs and if the first information indicates that the first cell is barred to aerial UEs. The aerial UE is configured not to treat the first cell as a barred cell in cell selection or cell reselection, if the system information contains the first information and if the first information indicates that the first cell is not barred for aerial UEs. Additionally, the aerial UE is configured not to treat the first cell as a barred cell in cell selection or cell reselection if the system information does not contain the first information.

In a second aspect, a method performed by an aerial UE includes the steps of:
(a) receiving system information via broadcast in a first cell;
(b) treating the first cell as a barred cell in cell selection or cell reselection, if the system information contains first information indicating whether the first cell is barred to aerial UEs and if the first information indicates that the first cell is barred to aerial UEs;
(c) not treating the first cell as a barred cell in cell selection or cell reselection, if the system information contains the first information and if the first information indicates that the first cell is not barred for aerial UEs; and
(d) not treating the first cell as a barred cell in cell selection or cell reselection if the system information does not contain the first information.

In a third aspect, an aerial UE is configured to receive first information via broadcast in a first cell. The first information indicates that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

In a fourth aspect, a method performed by an aerial UE includes receiving first information via broadcast in a first cell. The first information indicates that the first cell belongs to or contains an NTZ for aerial UEs; that uplink transmission in the first cell is not allowed for aerial UEs; or that the first cell provides downlink communication services to aerial UEs but does not provide uplink communication services to aerial UEs.

In a fifth aspect, a RAN node is configured to broadcast first information in a first cell. The first information indicates that the first cell belongs to or contains an NTZ for aerial UEs; that uplink transmission in the first cell is not allowed for aerial UEs; or that the first cell provides downlink communication services to aerial UEs but does not provide uplink communication services to aerial UEs.

In a sixth aspect, a method performed by a RAN node includes broadcasting first information in a first cell. The first information indicates that the first cell belongs to or contains an NTZ for aerial UEs; that uplink transmission in the first cell is not allowed for aerial UEs; or that the first cell provides downlink communication services to aerial UEs but does not provide uplink communication services to aerial UEs.

In a seventh aspect, an aerial UE is configured to receive in a first cell an excluded cell list specific to aerial UEs. The excluded cell list indicates one or more neighbor cells to be excluded from candidate cells for cell reselection by aerial UEs.

In an eighth aspect, a method performed by an aerial UE includes receiving in a first cell an excluded cell list specific to aerial UEs. The excluded cell list indicates one or more neighbor cells to be excluded from candidate cells for cell reselection by aerial UEs.

In a ninth aspect, a RAN node is configured to transmit in a first cell an excluded cell list specific to aerial UEs. The excluded cell list indicates one or more neighbor cells to be excluded from candidate cells for cell reselection by aerial UEs.

In a tenth aspect, a method performed by a RAN node includes transmitting in a first cell an excluded cell list specific to aerial UEs. The excluded cell list indicates one or more neighbor cells to be excluded from candidate cells for cell reselection by aerial UEs.

In an eleventh aspect, an aerial UE is configured to receive in a first cell a neighbor cell list specific to aerial UEs. Each of one or more cells included in the neighbor cell list is a cell belonging to or containing an NTZ for aerial UEs; a cell where uplink transmission is not permitted to aerial UEs; or a cell that provides downlink communication services to aerial UEs but does not provide uplink communication services to aerial UEs.

In a twelfth aspect, a method performed by an aerial UE includes receiving in a first cell a neighbor cell list specific to aerial UEs. Each of one or more cells included in the neighbor cell list is a cell belonging to or containing an NTZ for aerial UEs; a cell where uplink transmission is not permitted to aerial UEs; or a cell that provides downlink communication services to aerial UEs but does not provide uplink communication services to aerial UEs.

In a thirteenth aspect, a RAN node is configured to transmit in a first cell a neighbor cell list specific to aerial UEs. Each of one or more cells included in the neighbor cell list is a cell belonging to or containing an NTZ for aerial UEs; a cell where uplink transmission is not permitted to aerial UEs; or a cell that provides downlink communication services to aerial UEs but does not provide uplink communication services to aerial UEs.

In a fourteenth aspect, a method performed by a RAN node includes transmitting in a first cell a neighbor cell list specific to aerial UEs. Each of one or more cells included in the neighbor cell list is a cell belonging to or containing an NTZ for aerial UEs; a cell where uplink transmission is not permitted to aerial UEs; or a cell that provides downlink communication services to aerial UEs but does not provide uplink communication services to aerial UEs.

In a fifteenth aspect, a RAN node is configured to send first information indicating whether a first cell of the RAN node overlaps at least partially with an NTZ for aerial UEs to a neighboring RAN node, and to receive second information indicating whether a second cell of the neighboring RAN node overlaps at least partially with the NTZ from the neighboring RAN node.

In a sixteenth aspect, a method performed by a RAN node includes sending first information indicating whether a first cell of the RAN node overlaps at least partially with an NTZ for aerial UEs to a neighboring RAN node, and receiving second information indicating whether a second cell of the neighboring RAN node overlaps at least partially with the NTZ from the neighboring RAN node.

In a seventeenth aspect, a central unit of a RAN node is configured to send, to a first distributed unit of the RAN node, first information indicating whether a first cell provided by the first distributed unit overlaps at least partially with an NTZ for aerial UEs.

In an eighteenth aspect, a method performed by a central unit of a RAN node includes sending, to a first distributed unit of the RAN node, first information indicating whether a first cell provided by the first distributed unit overlaps at least partially with an NTZ for aerial UEs.

In a nineteenth aspect, a distributed unit of a RAN node is configured to receive, from a central unit of the RAN node, first information indicating whether a first cell provided by the distributed unit overlaps at least partially with an NTZ for aerial UEs.

In a twentieth aspect, a method performed by a distributed unit of a RAN node includes receiving, from a central unit of the RAN node, first information indicating whether a first cell provided by the distributed unit overlaps at least partially with an NTZ for aerial UEs.

In a twenty-first aspect, a central unit of a RAN node is configured to receive, from a first distributed unit of the RAN node, first information indicating whether a first cell provided by the first distributed unit overlaps at least partially with an NTZ for aerial UEs.

In a twenty-second aspect, a method performed by a central unit of a RAN node includes receiving, from a first distributed unit of the RAN node, first information indicating whether a first cell provided by the first distributed unit overlaps at least partially with an NTZ for aerial UEs.

In a twenty-third aspect, a distributed unit of a RAN node is configured to send, to a central unit of the RAN node, first information indicating whether a first cell provided by the distributed unit overlaps at least partially with an NTZ for aerial UEs.

In a twenty-fourth aspect, a method performed by a distributed unit of a RAN node includes sending, to a central unit of the RAN node, first information indicating whether a first cell provided by the distributed unit overlaps at least partially with an NTZ for aerial UEs.

In a twenty-fifth embodiment, a program includes a set of instructions (software code) that, if loaded into a computer, causes the computer to perform a method according to any of the aforementioned aspects.

### Advantageous Effects of Invention

According to the aspects described above, it is possible to provide apparatuses, methods, and programs that contribute to solving at least one of a plurality of problems related to implementing mechanisms enabling aerial UEs to respect NTZs.

### Brief Description of Drawings

Fig. 1 is a diagram showing an example configuration of a radio communication system related to one or more example embodiments.
Fig. 2 is a sequence diagram showing an example of operation of an aerial UE and a RAN node related to one or more example embodiments.
Fig. 3 is a flowchart showing an example of operation of an aerial UE related to one or more example embodiments.
Fig. 4 is a sequence diagram showing an example of operation of an aerial UE and a RAN node related to one or more example embodiments.
Fig. 5 is a sequence diagram showing an example of operation of an aerial UE and a RAN node related to one or more example embodiments.
Fig. 6 is a sequence diagram showing an example of operation of an aerial UE and a RAN node related to one or more example embodiments.
Fig. 7 is a sequence diagram showing an example of operation of an aerial UE and a RAN node related to one or more example embodiments.
Fig. 8 is a diagram showing an example of the format of a System Information Block type 3 (SIB3) information element related to one or more example embodiments.
Fig. 9 is a diagram showing an example of the format of a SIB type 4 (SIB4) information element related to one or more example embodiments.
Fig. 10 is a sequence diagram showing an example of operation of an aerial UE and a RAN node related to one or more example embodiments.
Fig. 11 is a diagram showing an example of the format of a SIB3 information element related to one or more example embodiments.
Fig. 12 is a diagram showing an example of the format of a SIB4 information element related to one or more example embodiments.
Fig 13 is a sequence diagram showing an example of signaling between RAN nodes related to one or more example embodiments.
Fig. 14 is a flowchart showing an example of operation of a RAN node related to one or more example embodiments.
Fig. 15 is a flowchart showing an example of operation of a RAN node related to one or more example embodiments.
Fig. 16 is a diagram showing an example of the format of a Served Cell Information NR information element related to one or more example embodiments.
Fig. 17 is a diagram showing an example of the format of a Neighbour Information NR information element related to one or more example embodiments.
Fig. 18 is a diagram showing an example configuration of a RAN node related to one or more example embodiments.
Fig. 19 is a sequence diagram showing an example of signaling between a central unit and a distributed unit related to one or more example embodiments.
Fig. 20 is a sequence diagram showing an example of signaling between a central unit and a distributed unit related to one or more example embodiments.
Fig. 21 is a sequence diagram showing an example of signaling between a central unit and a distributed unit related to one or more example embodiments.
Fig. 22 is a sequence diagram showing an example of operation of an aerial UE and a RAN node related to one or more example embodiments.
Fig. 23 is a sequence diagram showing an example of operation of an aerial UE and a RAN node related to one or more example embodiments.
Fig. 24 is a sequence diagram showing an example of operation of an aerial UE and a RAN node related to one or more example embodiments.
Fig. 25 is a flowchart showing an example of operation of an aerial UE related to one or more example embodiments.
Fig. 26 is a flowchart showing an example of operation of an aerial UE related to one or more example embodiments.
Fig. 27 is a sequence diagram showing an example of operation of an aerial UE and a RAN node related to one or more example embodiments.
Fig. 28 is a block diagram showing an example configuration of an aerial UE related to one or more example embodiments.
Fig. 29 is a block diagram showing an example configuration of a RAN node related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are primarily described in the context of the 3GPP fifth generation mobile communication system (5G system). However, these example embodiments may also be applied to other radio communication systems supporting radio terminals similar to 3GPP aerial UEs.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

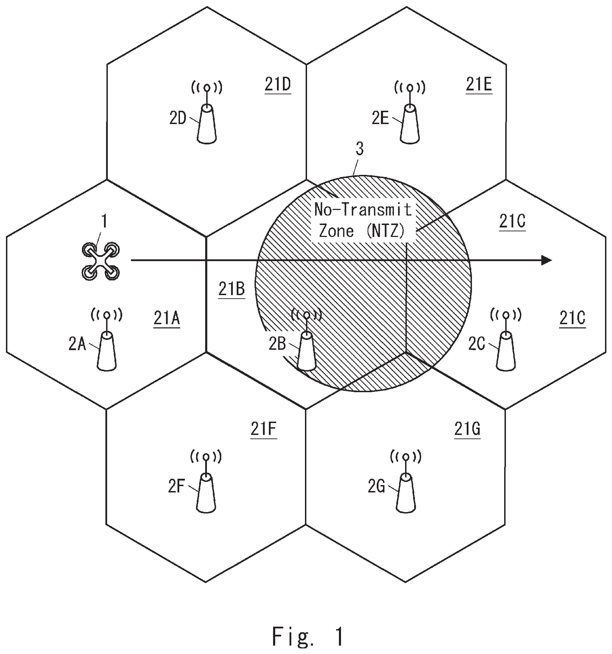

First, the configuration and operation of a plurality of network elements common to a plurality of example embodiments are described. Fig. 1 shows an example configuration of a radio communication system related to a plurality of example embodiments. Each element shown in Fig. 1 is a network function, providing interfaces defined by the 3GPP, for example. Each element (or network function) shown in Fig. 1 can be implemented, for example, as a network element on dedicated hardware, as a software instance running on dedicated hardware, or as a virtualized function instantiated on an application platform.

The radio communication system shown in Fig. 1 includes an aerial UE 1 and a plurality of RAN nodes 2 (specifically, RAN nodes 2A to 2G). In the following, matters common to the plurality of RAN nodes 2A-2G will be described with reference to RAN node 2, unless otherwise noted. The RAN node 2 can be, for example, any one of the RAN nodes 2A-2G. Similarly, matters common to a plurality of cells 21A to 21G will be described with reference to cell 21, unless otherwise noted. The cell 21 can be, for example, any one of the cells 21A to 21G.

The aerial UE 1 is a UE supporting aerial UE communications or capable of aerial communications. The aerial UE 1 may be installed on a UAV (e.g., drones) or a manned aircraft (e.g., helicopters, flying taxis, etc.). The aerial UE 1 may be an LTE aerial UE or a NR aerial UE. The aerial UE 1 may be referred to by other terms, such as UAV UE, UAV radio terminal, aerial radio terminal, UAV mobile terminal, aerial mobile terminal, UAV mobile station, aerial mobile station, UAV wireless transmit receive unit (WTRU), or aerial WTRU.

The RAN node 2 may be referred to as a base station, radio station, or access point. The RAN node 2 may be an E-UTRAN node or an NG-RAN node. The RAN node 2 may be a combination of a Central Unit (CU) (e.g., gNB-CU) and one or more Distributed Units (DUs) (e.g., gNB-DUs) in a cloud RAN (C-RAN) deployment. C-RAN is also referred to as CU/DU split. In addition, a CU may contain a Control Plane (CP) Unit (e.g., gNB-CU-CP) and one or more User Plane (UP) Units (e.g., gNB-CU-UPs).

The RAN nodes 2A to 2G provide the cells 21A to 21G, respectively. One RAN node 2 may provide more than one cell. At least two of the cells 21A to 21G illustrated in Fig. 1 may be provided by one RAN node 2. The sizes of the cells 21A to 21G shown in Fig. 1 are for illustrative purposes only. The sizes of the cells 21A to 21G may be different from each other. For example, any of the cells 21A to 21G can be a macrocell, any of the others can be a microcell, and any of the remaining cells can be a picocell. Any of the cells 21A to 21G can be contained or covered by any of the others. The frequency bands (e.g., NR operating bands, or NR Radio Frequency (RF) carriers) of the cells 21A to 21G can be different from each other.

In the example in Fig. 1, the aerial UE 1 flies through cells 21A, 21B, and 21C in that order. In other words, the flight path of the aerial UE 1 sequentially includes waypoints in the cells 21A, 21B, and 21C. Each waypoint is defined by a three-dimensional position. The flight path of the aerial UE 1 contains a number of waypoints, each of which is defined as a three-dimensional position.

In the example shown in Fig. 1, a no-transmit zone (NTZ) 3 specific to aerial UEs is defined. The geographic extent of the NTZ 3 extends over the cells 21B, 21C, 21E, and 21G. As previously explained, the NTZ 3 is a geographical area where aerial UEs are not allowed to operate in a specific frequency band to ensure coexistence with other radio systems and services, such as DTT receivers, RA sites, and radar sites. The NTZ 3 can be defined and enforced at the national level. For example, the NTZ 3 may be defined around a RAS site operating in 1400-1427 MHz for aerial UEs operating in the 703-718 MHz frequency band. The NTZ 3 may be defined around a RAS site operating in 1660-1670 MHz for aerial UEs operating in the 832-837 MHz frequency band. The NTZ 3 may be defined around a RAS site operating in 2690-2700 MHz for aerial UEs operating in the 2500-2570 MHz or 2570-2620 MHz frequency band. Alternatively, the NTZ 3 may be defined around a radar operating in 2700-2900 MHz for aerial UEs operating in the 2500-2570 MHz or 2570-2620 MHz frequency band.

The definition of the geographical shape of the NTZ 3 is not limited to that shown in the example in Fig. 1. In Fig. 1, the NTZ 3 may be defined as a three-dimensional region including a circular-shaped ground area with a predetermined radius centered at a predetermined location (e.g., a RAS site or radar site) and the airspace above it up to a predetermined height. Alternatively, the NTZ 3 may be defined as a spherical three-dimensional region with a predetermined radius centered at a predetermined location. The NTZ 3 may be defined as a three-dimensional region having an ellipsoidal shape centered on a predetermined location. The NTZ 3 may be defined as a three-dimensional region including a square-shaped ground area centered on a predetermined location and the airspace above it up to a predetermined height. The NTZ 3 may be defined as a three-dimensional region having a cubic or rectangular prism shape centered on a predetermined location.

If the NTZ 3 is to be understood in a very strict manner, it would mean the aerial UE 1 should not perform initial access to cells in the NTZ 3 or cells that partially overlap with the NTZ 3 (e.g., cells 21B, 21C, 21E, and 21G in Fig. 1). In that case, the aerial UE 1 may not even camp on these cells that overlap at least partially with the NTZ 3. In contrast, in a less strict scenario, the aerial UE 1 could access these cells that overlap at least partially with the NTZ 3, but is steered to another cell for further transmissions.

Two mechanisms are conceivable for the aerial UE 1 to respect the NTZ 3. One is a cell-level granularity mechanism, and the other is a finer-grained mechanism. For example, at a cell-level granularity, one or more RAN nodes 2 may take cell-level measures to bar the aerial UE 1 from accessing NTZ-affected cells, such as cells 21B, 21C, 21E, and 21G in Fig. 1.

At a finer granularity, the aerial UE 1 in RRC_CONNECTED mode may notify the RAN node 2 in a case where the UE is entering or leaving the NTZ 3. The aerial UE 1 may use Global Navigation Satellite Systems (GNSS) positioning information to obtain its location. Signaling may be defined for the aerial UE 1 in RRC_CONNECTED mode to notify the RAN node 2 if it is approaching or entering the NTZ 3. This allows the network (e.g., one or more RAN nodes 2) to be prepared to maintain the connectivity with the aerial UE 1 (e.g., to switch to another frequency band or carrier that is allowed in the NTZ 3). Vice versa, knowing the timing at which the aerial UE 1 is leaving the NTZ 3 enables the network (e.g., one or more RAN node 2) to recover to a previous mode of communication with the aerial UE 1.

Example embodiments described below provide operations, procedures, and signaling for the Aerial 1 and the RAN node 2 that contribute to or assist in implementing a mechanism enabling aerial UEs to respect an NTZ.

### First Example Embodiment

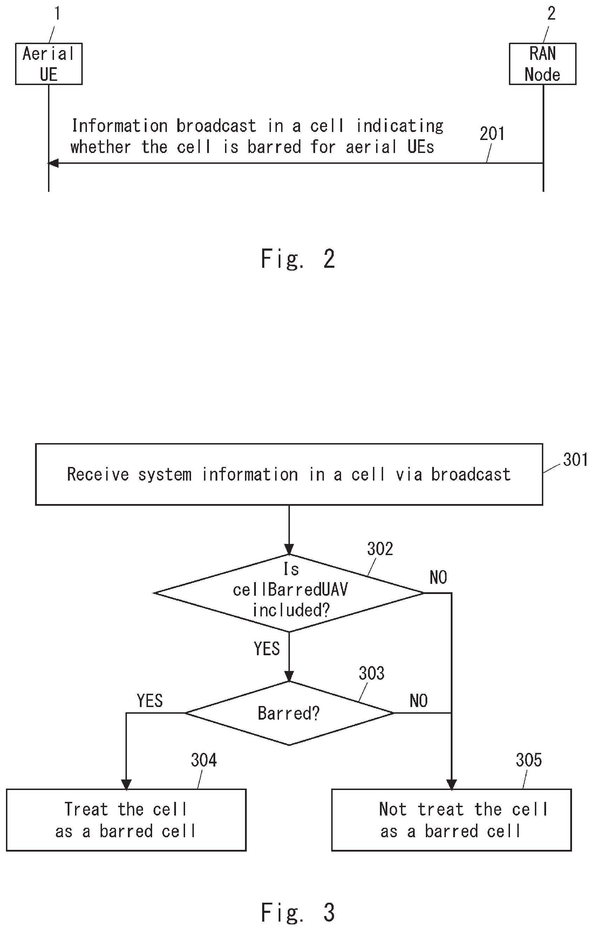

An example configuration of a radio communication system according to this example embodiment is similar to the example configuration described with reference to Fig 1. Fig 2 illustrates an example of signaling between the aerial UE 1 and the RAN node 2. In step 201, the RAN node 2 (e.g., RAN node 2B in Fig 1) transmits system information via broadcast in the cell 21 (e.g., cell 21B in Fig 1). The system information may be a Master Information Block (MIB) or any System Information Block (SIB) (e.g., SIB type 1 (SIB1) or SIB type 2 (SIB2)).

The system information in step 201 contains information indicating whether the cell is barred for aerial UEs. This information may be a single bit. This information may be an enumerated -type Information Element (IE) and may indicate either "barred" or "not barred". This IE may be named "cellBarredUAV", for example, but it is not limited to this name. This information or IE may be applied to all Public Land Mobile Networks (PLMNs) and Non-Public Networks (NPNs) associated with the cell. This information or IE may be included in the MIB or SIB1, similar to other information elements indicating cell status and cell reservation (e.g., cellBarred IE, cellBarredNTN IE, cellBarredRedCap1Rx, cellReservedForOtherUse).

If the cell 21 is included in or partially overlaps the NTZ 3 for aerial UEs, and if the uplink frequency of the cell 21 falls within a frequency band prohibited in the NTZ 3, the RAN node 2 may indicate to the aerial UE 1 that the cell 21 is barred for aerial UEs via the information or IE (e.g., cellBarredUAV). Otherwise, the RAN node 2 may indicate to the aerial UE 1 that the cell 21 is not barred for aerial UEs via the information or IE. Alternatively, the RAN node 2 may indicate that the cell 21 is not barred for aerial UEs by omitting the information or IE from the system information.

Fig. 3 illustrates an example of operation of the aerial UE 1. In step 301, the aerial UE 1 receives system information (e.g., SIB1) in the cell 21 via broadcast. In step 302, the aerial UE 1 determines if the received system information contains an IE (e.g., cellBarredUAV) indicating whether the cell 21 is barred for aerial UEs.

If the system information contains the IE (YES in step 302) and the IE indicates that the cell is barred for aerial UEs (YES in step 303), the aerial UE 1 treats the cell as a barred cell in cell selection or cell reselection (step 304). In other words, the aerial UE 1 excludes the cell 21 from the candidate cells for cell selection or cell reselection. In contrast, if the system information contains the IE in question (YES in step 302) and the IE indicates that the cell is not barred for aerial UEs (NO in step 303), the aerial UE 1 does not treat the cell as a barred cell in cell selection or cell reselection (step 305). In addition, if the system information does not include that IE (NO in step 302), the aerial UE 1 does not treat the cell 21 as a barred cell in cell selection or cell reselection (step 305).

According to the operation described with reference to Figs. 2 and 3, the aerial UE 1 can consider access to the cell 21 not prohibited if the information or IE (e.g., cellBarredUAV) indicating whether the cell 21 is barred for aerial UEs is not broadcast in the cell 21. This helps clarify the signaling and UE behavior details concerning the mechanism enabling aerial UEs to respect the NTZ.

### Second Example Embodiment

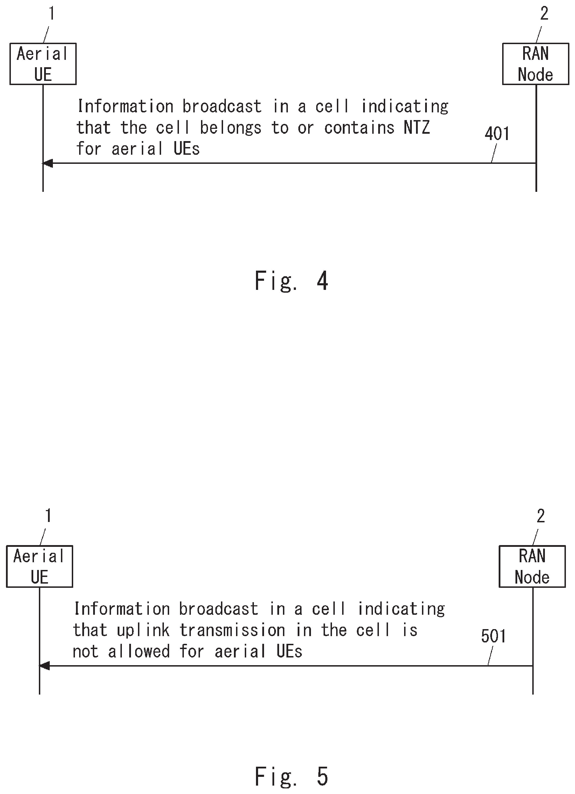

An example configuration of a radio communication system according to this example embodiment is similar to the example configuration described with reference to Fig 1. Figs. 4, 5, and 6 illustrate examples of signaling between the aerial UE 1 and the RAN node 2. In step 401, 501, and 601, the RAN node 2 (e.g., RAN node 2B in Fig 1) transmits NTZ-related information via broadcast in the cell 21 (e.g., cell 21B in Fig 1). The NTZ-related information may be included in system information (e.g., MIB, SIB1, or other SIBs).

In the example of Fig. 4, the NTZ-related information (step 401) indicates that the cell 21 belongs to or contains the NTZ 3 for aerial UEs. In other words, the NTZ-related information (step 401) indicates that at least a portion of the cell 21 overlaps with the NTZ 3. If the aerial UE 1 receives the NTZ-related information (step 401) in the cell 21, the aerial UE 1 may understand that uplink transmission is not allowed for aerial UEs in the cell. More specifically, the aerial UE 1 may understand that initial access from RRC_IDLE, RRC reestablishment, RRC resume from RRC_INACTIVE, and random access associated with all uplink transmissions from aerial UEs are restricted in the cell 21.

In the example of Fig 5, the NTZ-related information (step 501) indicates that uplink transmission is not allowed for aerial UEs in the cell 21. If the aerial UE 1 receives the NTZ-related information (step 501) in the cell 21, the aerial UE 1 may understand that uplink transmission is not allowed for aerial UEs in the cell. More specifically, the aerial UE 1 may understand that initial access from RRC_IDLE, RRC reestablishment, RRC resume from RRC_INACTIVE, and random access associated with all uplink transmissions from aerial UEs are restricted in the cell 21.

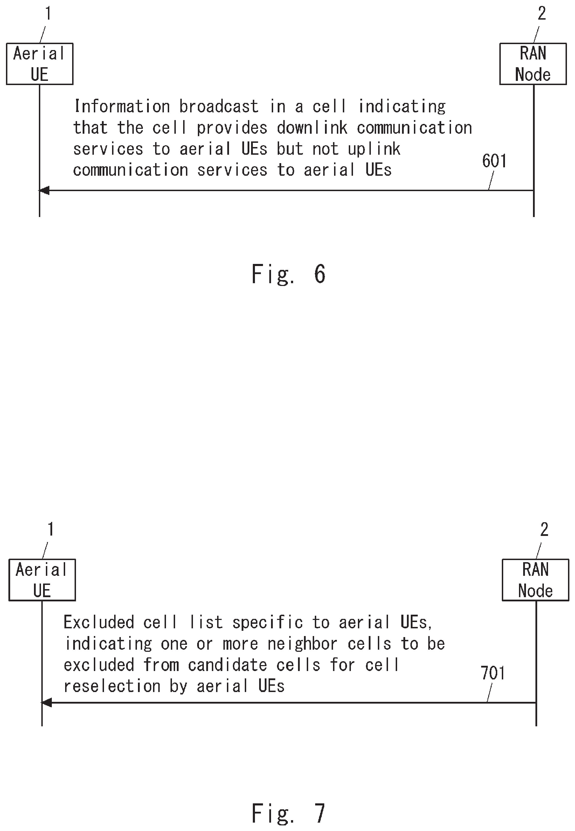

In the example of Fig 6, the NTZ-related information (step 601) indicates that the cell 21 provides downlink communication services to aerial UEs but does not provide uplink communication services to aerial UEs. Such a cell may be referred to as a Supplementary Downlink cell. If the aerial UE 1 receives the NTZ-related information (step 601) in the cell 21, the aerial UE 1 may understand that downlink data reception is allowed in the cell 21, but uplink data transmission is not allowed.

The aerial UE 1 may consider the NTZ-related information (step 401, 501, or 601) for either or both cell selection and cell reselection. For example, during cell selection or reselection, the aerial UE 1 may preferentially select a cell that is not transmitting the NTZ-related information over a cell that is transmitting the NTZ-related information. For example, if SIB2 includes a rangeToBestCell field, the aerial UE 1 may perform cell reselection to a cell that is not transmitting the NTZ-related information, from among multiple candidate cells whose R-value-calculated using the average Reference Signal Received Power (RSRP)-falls within the range specified by the rangeToBestCell field relative to the R-value of the top-ranked cell. Alternatively, the aerial UE 1 may treat cells transmitting the NTZ-related information (step 401, 501, or 601) as barred cells during cell selection or cell reselection.

The NTZ-related information may be an enumerated-type IE and may indicate "True". This IE may be named, for example, "noTransmitZoneUAV", "noRachULtransmitUAV", or "supplementaryDLUA", but is not limited to these names. This information or IE may be applied to all PLMNs and NPNs associated with the cell. The information or IE may be contained in the MIB or SIB1, similar to other information elements indicating cell status and cell reservation (e.g., cellBarred IE, cellBarredNTN IE, cellBarredRedCap1Rx, cellReservedForOtherUse).

If the cell 21 is contained in or partially overlaps with the NTZ 3 for aerial UEs, and the uplink frequency of the cell 21 falls within a frequency band prohibited in the NTZ 3, the RAN node 2 may broadcast the aforementioned NTZ-related information in the cell 21. Otherwise, the RAN node 2 may indicate that the cell 21 is not barred for aerial UEs by not transmitting the aforementioned NTZ-related information in the cell 21.

According to the operation described with reference to Figs. 4, 5, and 6, the RAN node 2 can indicate to aerial UEs, via broadcast, whether the cell 21 is within the NTZ for aerial UEs, whether uplink transmission by aerial UEs in the cell 21 is barred, or whether the cell 21 is dedicated to downlink service for aerial UEs. This helps clarify the signaling details regarding the mechanism enabling aerial UEs to respect the NTZ.

### Third Example Embodiment

An example configuration of a radio communication system according to this example embodiment is similar to the example configuration described with reference to Fig 1. Fig. 7 illustrates an example of signaling between the aerial UE 1 and the RAN node 2. In step 701, the RAN node 2 (e.g., RAN node 2A in Fig. 1) transmits in its own cell 21 (e.g., cell 21A in Fig. 1) an excluded cell list specific to aerial UEs. The RAN node 2 (e.g., RAN node 2A in Fig. 1) may include, in the excluded cell list specific to aerial UEs, one or more neighbor cells (e.g., cell 21B in Fig. 1) that at least partially overlap with the NTZ 3 and whose uplink frequencies fall within frequency bands prohibited in the NTZ 3.

The RAN node 2 may transmit the aerial UE-specific excluded cell list to the aerial UE 1 via a dedicated Radio Resource Control (RRC) message or via common system information in the cell 21. The RAN node 2 may transmit or broadcast the aerial UE-specific excluded cell list via SIB type 3 (SIB3) or SIB type 4 (SIB4).

The aerial UE 1 may exclude one or more cells included in the received excluded cell list from the candidate cells for cell reselection. Additionally or alternatively, the aerial UE 1 may exclude cells included in the excluded cell list from the primary cell candidates for carrier aggregation. Additionally or alternatively, the aerial UE 1 may exclude one or more cells included in the received excluded cell list from being subject to Radio Resource Management (RRM) measurements for cell reselection. Additionally or alternatively, the aerial UE 1 may exclude one or more cells included in the received excluded cell list from being subject to IDLE/INACTIVE measurements. The IDLE/INACTIVE measurement is introduced in 3GPP Release 16. The IDLE/INACTIVE measurement is a feature in which the UE 1 acquires and stores measurement results for the serving cell and neighbor cells while it is in the RRC_IDLE or RRC_INACTIVE state, and transmits the stored measurement results to the network while it is in the RRC_CONNECTED state.

According to the operation described with reference to Fig. 7, the RAN node 2 can transmit, in its own cell 21, an excluded cell list specific to aerial UEs. This helps clarify the details of signaling concerning the mechanism enabling aerial UEs to respect NTZs, particularly signaling related to cell reselection by aerial UEs.

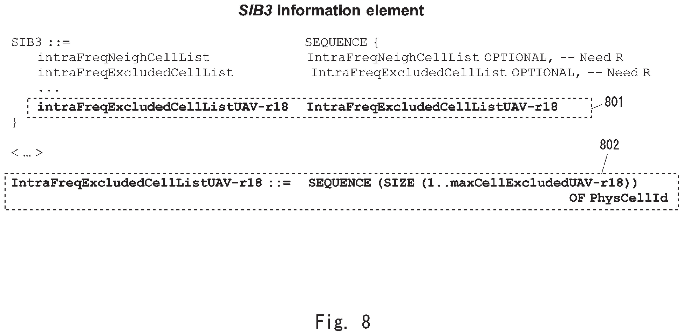

Fig. 8 shows an example of the format of the SIB3 Information Element (IE). The SIB3 IE contains neighbor cell-related information that is relevant only for intra-frequency cell reselection. The SIB3 IE includes cells with specific reselection parameters and exclude-listed cells. In the example of Fig. 8, the SIB3 IE can include an intraFreqExcludedCellListUAV field 801. The intraFreqExcludedCellListUAV field 801 is an IntraFreqExcludedCellListUAV IE 802. The IntraFreqExcludedCellListUAV IE 802 is an example of the excluded cell list in step 701, i.e., the excluded cell list specific to aerial UEs. The IntraFreqExcludedCellListUAV IE 802 indicates one or more neighbor cells to be excluded during intra-frequency cell reselection by aerial UEs. The names of field 801 and IE 802 are examples and may differ.

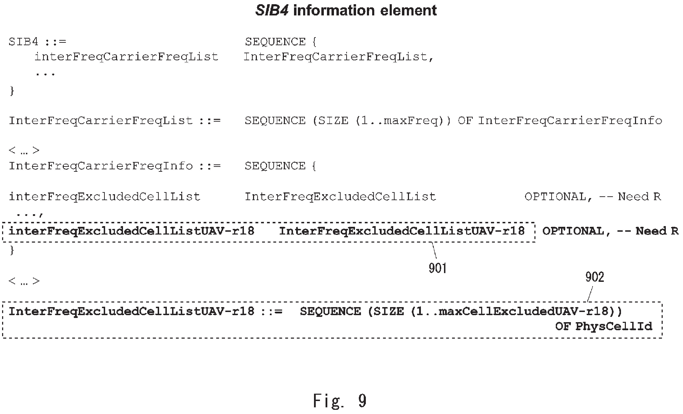

Fig 9 shows an example of the format of the SIB4 IE. The SIB4 IE contains information related to inter-frequency cell reselection (i.e., information about other NR frequencies as well as inter-frequency neighbor cells related to cell reselection). The SIB4 IE can also be used for IDLE/INACTIVE measurements. The SIB4 IE includes cell reselection parameters common to a given frequency and cell-specific reselection parameters. In the example of Fig. 9, the SIB4 IE can include an interFreqExcludedCellListUAV field 901. The interFreqExcludedCellListUAV field 901 is an InterFreqExcludedCellListUAV IE 902. The InterFreqExcludedCellListUAV IE 902 is an example of the excluded cell list in step 701, i.e., the excluded cell list specific to aerial UEs. The InterFreqExcludedCellListUAV IE 902 indicates one or more neighbor cells to be excluded during inter-frequency cell reselection by aerial UEs. Additionally, the InterFreqExcludedCellListUAV IE 902 indicates one or more neighbor cells to be excluded from IDLE/INACTIVE measurements by aerial UEs. The names of field 901 and IE 902 are examples and may differ.

### Fourth Example Embodiment

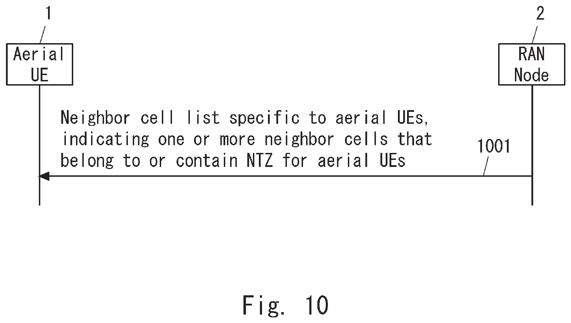

An example configuration of a radio communication system according to this example embodiment is similar to the example configuration described with reference to Fig 1. Fig. 10 illustrates an example of signaling between the aerial UE 1 and the RAN node 2. In step 1001, the RAN node 2 (e.g., RAN node 2A in Fig. 1) transmits in its own cell 21 (e.g., cell 21A in Fig. 1) a neighbor cell list specific to aerial UEs. Each of one or more cells included in the neighbor cell list is a cell belonging to or containing the NTZ 3 for aerial UEs; a cell where uplink transmission is not permitted to aerial UEs; or a cell that provides downlink communication services to aerial UEs but does not provide uplink communication services to aerial UEs. The RAN node 2 (e.g., RAN node 2A in Fig. 1) may include in this neighbor cell list one or more neighbor cells (e.g., cell 21B in Fig. 1) that at least partially overlap with the NTZ 3 and whose uplink frequency falls within a frequency band prohibited in the NTZ 3.

The RAN node 2 may transmit the aerial UE-specific neighbor cell list to the aerial UE 1 via a dedicated Radio Resource Control (RRC) message or via common system information in the cell 21. The RAN node 2 may transmit or broadcast the aerial UE-specific neighbor cell list via SIB3 or SIB4.

The aerial UE 1 may exclude one or more cells included in the received neighbor cell list from the candidate cells for cell reselection. Additionally or alternatively, the aerial UE 1 may exclude cells included in the neighbor cell list from the primary cell candidates for carrier aggregation. Additionally or alternatively, the aerial UE 1 may exclude one or more cells included in the received neighbor cell list from being subject to RRM measurements for cell reselection. Additionally or alternatively, the aerial UE 1 may exclude one or more cells included in the received neighbor cell list from being subject to IDLE/INACTIVE measurements.

According to the operation described with reference to Fig 10, the RAN node 2 can transmit, in its own cell 21, a neighbor cell list specific to aerial UEs. This enables the RAN node 2 to inform aerial UEs belonging to its cell 21 of neighbor cells that belong to or contain the NTZ 3 for aerial UEs, neighbor cells where uplink transmission is not permitted for aerial UEs, or neighbor cells that provide downlink communication services to aerial UEs but do not provide uplink communication services to aerial UEs. This helps clarify the signaling details for the mechanism enabling aerial UEs to respect the NTZ, particularly signaling regarding cell reselection by aerial UEs,.

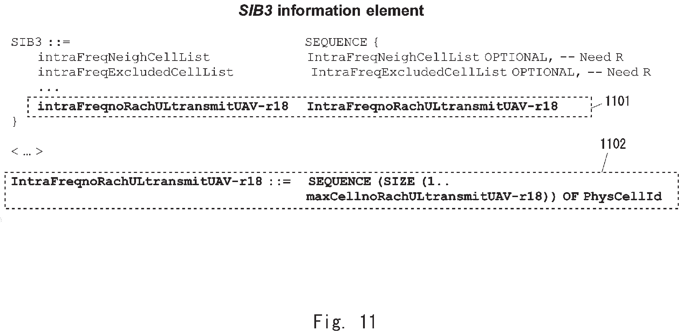

Fig. 11 shows an example of the format of the SIB3 IE. The SIB3 IE contains neighbor cell-related information that is relevant only for intra-frequency cell reselection. The SIB3 IE includes cells with specific reselection parameters and exclude-listed cells. In the example of Fig. 11, the SIB3 IE can include an intraFreqnoRachULtransmitUAV field 1101. The intraFreqnoRachULtransmitUAV field 1101 is an IntraFreqnoRachULtransmitUAV IE 1102. The IntraFreqnoRachULtransmitUAV IE 1102 is an example of the neighbor cell list in step 1001, i.e., the neighbor cell list specific to aerial UEs. The IntraFreqnoRachULtransmitUAV IE 1102 indicates one or more intra-frequency neighbor cells where random access transmission by aerial UEs is barred. The names of field 1101 and IE 1102 are examples and may differ. For instance, these names could be IntraFreqnoTransmitZoneUAV or IntraFreqsupplementaryDLUAV.

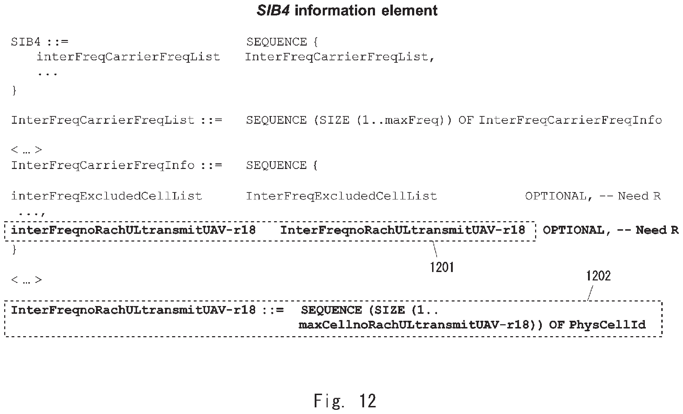

Fig 12 shows an example of the format of the SIB4 IE. The SIB4 IE contains information related to inter-frequency cell reselection (i.e., information about other NR frequencies as well as inter-frequency neighbor cells related to cell reselection). The SIB4 IE can also be used for IDLE/INACTIVE measurements. The SIB4 IE includes cell reselection parameters common to a given frequency and cell-specific reselection parameters. In the example of Fig. 12, the SIB4 IE may include an interFreqnoRachULtransmitUAV field 1201. The interFreqnoRachULtransmitUAV field 1201 is an InterFreqnoRachULtransmitUAV IE 1202. The InterFreqnoRachULtransmitUAV IE 1202 is an example of the neighbor cell list in step 1001, i.e., the neighbor cell list specific to aerial UEs. The InterFreqnoRachULtransmitUAV IE 1202 indicates one or more inter-frequency neighbor cells where random access transmission by aerial UEs is barred. The names of field 1201 and IE 1202 are examples and may differ. For instance, these names could be InterFreqnoTransmitZoneUAV or InterFreqsupplementaryDLUAV.

### Fifth Example Embodiment

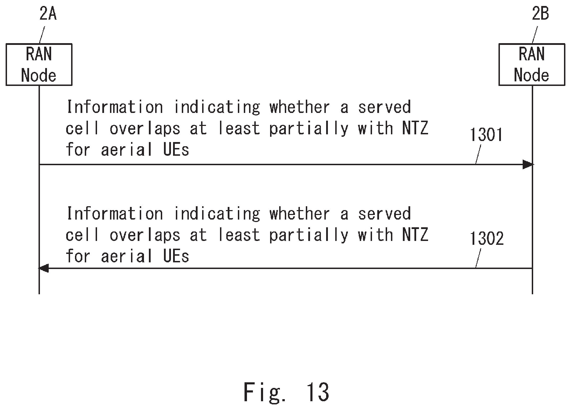

An example configuration of a radio communication system according to this example embodiment is similar to the example configuration described with reference to Fig 1. Fig. 13 illustrates an example of signaling between two RAN nodes 2. In step 1301, a RAN node 2A sends information to a neighbor RAN node 2B indicating whether a cell 21A provided by the RAN node 2A at least partially overlaps with the NTZ 3. If the cell 21A overlaps at least partially with the NTZ 3 and the uplink frequency of the cell 21A falls within a frequency band barred in the NTZ 3, the RAN node 2A may inform the RAN node 2B that the cell 21A overlaps at least partially with the NTZ 3. Otherwise, the RAN node 2A may inform the RAN node 2B that the cell 21A does not overlap with the NTZ 3, even partially.

In step 1302, the RAN node 2A receives information from the neighbor RAN node 2B indicating whether a cell 21B provided by the neighbor RAN node 2B at least partially overlaps with the NTZ 3. If the cell 21B overlaps at least partially with the NTZ 3 and the uplink frequency of the cell 21B falls within a frequency band barred in the NTZ 3, the RAN node 2B may inform the RAN node 2A that the cell 21B overlaps at least partially with the NTZ 3. Otherwise, the RAN node 2B may inform the RAN node 2A that the cell 21B does not overlap with the NTZ 3, even partially.

The order of steps 1301 and 1302 is not limited. The control message carrying information in each of steps 1301 and 1302 may be an Xn Application Protocol (XnAP) message, and more specifically, may be an XN SETUP REQUEST, XN SETUP RESPONSE, NG-RAN NODE CONFIGURATION UPDATE, or ACCESS AND MOBILITY INDICATION message, for example.

Additionally, the RAN node 2A may send information to the RAN node 2B indicating whether each of the neighbor cells of its cell 21A, specifically one or more neighbor cells 21 (e.g., cells 21D and 21F in Fig 1) provided by one or more neighbor RAN nodes (e.g., RAN nodes 2D and 2F in Fig 1) other than the RAN node 2B, overlaps at least partially with the NTZ 3. The RAN node 2A may receive the information from the RAN nodes 2D and 2F. The RAN node 2A may send information about the overlap between neighbor cells and the NTZ to the RAN node 2B using the same messages as those used in step 1301 to send information about the overlap between its own cell 21A and the NTZ. Alternatively, the RAN node 2A may send this information to the RAN node 2B in a separate message.

Similarly, the RAN node 2B may send information to the RAN node 2A indicating whether each of the neighbor cells of its cell 21B, specifically one or more cells 21 (e.g., cells 21C, 21E, and 21G in Fig 1) provided by one or more neighbor RAN nodes other than the RAN node 2A, overlaps at least partially with the NTZ 3. The RAN node 2B may receive the information from the RAN nodes 2C, 2E, and 2G. The RAN node 2B may send information about the overlap between neighbor cells and the NTZ to the RAN node 2A using the same messages as those used in step 1302 to send information about the overlap between its own cell 21B and the NTZ. Alternatively, the RAN node 2B may send this information to the RAN node 2A in a separate message.

According to the operation described with reference to Fig. 13, the RAN node 2A can exchange or share information regarding the overlap between the cell 21 and the NTZ 3 with the neighbor RAN node 2B. This helps clarify the signaling details concerning the mechanism enabling aerial UEs to respect the NTZ.

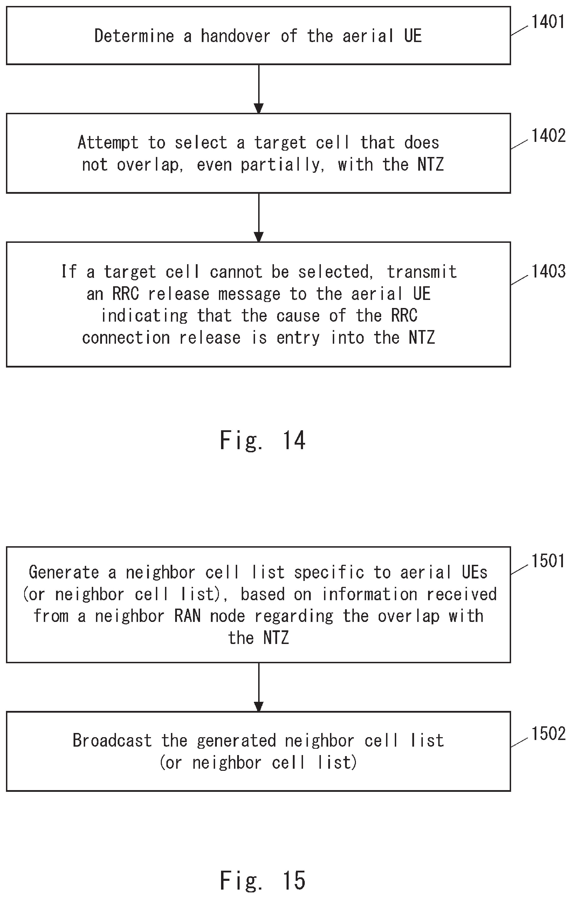

The RAN node 2A can use the information received from the RAN node 2B about the overlap between the neighbor cell 21B and the NTZ 3 for various purposes or applications. For example, as shown in Fig. 14, the RAN node 2A may consider or use this information to determine a target cell for a handover of the aerial UE 1 in the RRC_CONNECTED state. The handover may be a conditional handover (CHO). Additionally or alternatively, as shown in Fig. 15, the RAN node 2A may consider or use the information to generate an excluded cell list or a neighbor cell list specific to aerial UEs, which may be similar to those described in the third or fourth example embodiment.

Fig 14 illustrates an example of operation of the RAN node 2A. In step 1401, the RAN node 2A determines a handover of the aerial UE 1 in the RRC_CONNECTED state. This handover may be a conditional handover (CHO). The RAN node 2A may determine the handover of the aerial UE 1 based at least on the reception of a measurement report from the aerial UE 1. The RAN node 2A may determine the handover of the aerial UE 1 based at least on flight path information about the aerial UE 1 received from the aerial UE 1.

In step 1402, the RAN node 2A attempts to select a target cell that does not overlap, even partially, with the NTZ 3. If a target cell that does not overlap, even partially, with the NTZ 3 is selected, the RAN node 2A prepares a handover or CHO to the target cell. Then, the RAN node 2A transmits configuration information for the handover or CHO to the aerial UE 1. In response to receiving the configuration information for the handover, the aerial UE 1 leaves the cell 21A and starts accessing the target cell. Alternatively, after receiving the configuration information for the CHO and in response to the CHO execution conditions being satisfied, the aerial UE 1 leaves the cell 21A and starts accessing the target cell.

Conversely, if the RAN node 2A fails to select a target cell that does not overlap even partially with the NTZ 3, then at step 1403, the RAN node 2A sends a message to the aerial UE 1 to release the RRC connection of the aerial UE 1. This message may be an RRCRelease message. The RAN node 2A includes a cause value in the message indicating that the cause of the RRC connection release is entry into the NTZ. In other words, the message indicates that the cause of the RRC connection release is entry into the NTZ.

14, the RAN node 2A can consider or use information about the overlap between neighbor cells and the NTZ to determine a target cell for a handover of the aerial UE 1. This helps clarify the operation and signaling details regarding the mechanism enabling aerial UEs to respect the NTZ, particularly regarding the operation and signaling for aerial UE handovers.

Fig. 15 illustrates an example of operation of the RAN node 2A. In step 1501, the RAN node 2A generates an aerial UE-specific neighbor cell list (or neighbor cell list) based on information received from the neighbor RAN node 2B regarding the overlap with the NTZ 3. In step 1502, the RAN node 2A broadcasts the generated neighbor cell list (or neighbor cell list) in its own cell 21A.

The aerial UE-specific excluded cell list may be the same as that described in the third embodiment. Specifically, the aerial UE-specific excluded cell list may indicate one or more adjacent cells to be excluded from the candidate cells for cell reselection by aerial UEs. The RAN node 2A may include, in the excluded cell list, cells that at least partially overlap with the NTZ 3 and whose uplink frequencies fall within frequency bands prohibited in the NTZ 3.

On the other hand, the aerial UE-specific neighbor cell list may be the same as that described in the fourth embodiment. Specifically, each of one or more cells included in the aerial UE-specific neighbor cell list may be a cell that belongs to or contains the NTZ 3, a cell where uplink transmission is not permitted for aerial UEs, or a cell that provides downlink communication services to aerial UEs but does not provide uplink communication services to aerial UEs. The aerial UE-specific neighbor cell list may cause aerial UEs to exclude one or more cells included in the neighbor cell list from candidate cells for cell reselection. Additionally, or alternatively, the aerial UE-specific neighbor cell list may cause aerial UEs to exclude cells included in the neighbor cell list from primary cell candidates for carrier aggregation. The RAN node 2A may include, in the neighbor cell list, cells that at least partially overlap with the NTZ 3 and whose uplink frequencies fall within frequency bands prohibited in the NTZ 3.

According to the operation described with reference to Fig 15, the RAN node 2A can consider or use information regarding the overlap between neighbor cells and the NTZ to control cell reselection performed by the aerial UE 1. This helps clarify the operation and signaling details regarding the mechanism enabling aerial UEs to respect the NTZ, particularly concerning the operation and signaling related to cell reselection by aerial UEs.

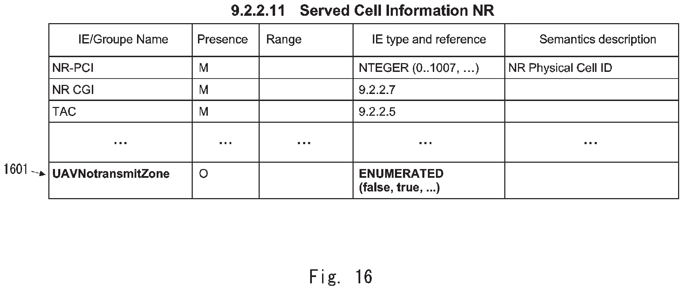

Fig. 16 shows an example of the format for the Served Cell Information NR IE. The Served Cell Information NR IE contains cell configuration information of an NR cell that a neighbor NG-RAN node may need for the XnAP interface. The Served Cell Information NR IE can be included in XN SETUP REQUEST, XN SETUP RESPONSE, NG-RAN NODE CONFIGURATION UPDATE, and NG-RAN NODE CONFIGURATION UPDATE ACKNOWLEDGE messages, for example. In the example of Fig 16, the Served Cell Information NR IE can include a UAVNotransmitZone IE 1601. The UAVNotransmitZone IE 1601 indicates whether the NR cell associated with the Served Cell Information NR IE at least partially overlaps with an NTZ for aerial UEs. The UAVNotransmitZone IE 1601 may be of enumerated type and may indicate either "false" or "true".

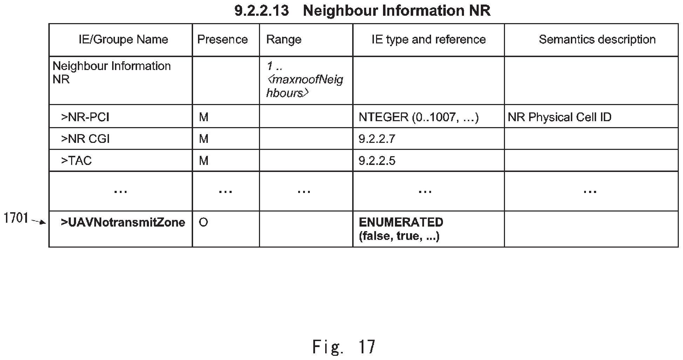

Fig 17 shows an example of the format of the Neighbour Information NR IE. The Neighbour Information NR IE contains cell configuration information of NR cells that a neighbor RAN node may need to properly operate its own served cells. The Neighbour Information NR IE may be included in XN SETUP REQUEST, XN SETUP RESPONSE, NG-RAN NODE CONFIGURATION UPDATE, and NG-RAN NODE CONFIGURATION UPDATE ACKNOWLEDGE messages, for example. In the example of Fig 17, the Neighbor Information NR IE may contain a UAVNotransmitZone IE 1701 for each of one or more neighbor NR cells. The UAVNotransmitZone IE 1701 indicates whether the associated neighbor NR cell at least partially overlaps with an NTZ for aerial UEs. The UAVNotransmitZone IE 1701 may be of enumerated type and may indicate "false" or "true".

### Sixth Example Embodiment

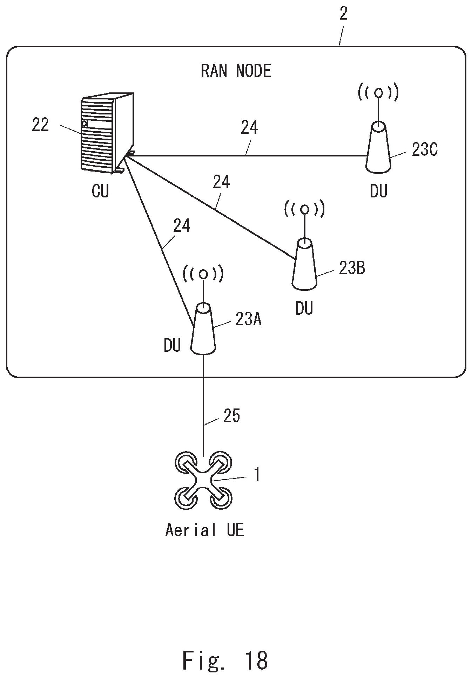

An example configuration of a radio communication system according to this example embodiment is similar to the example configuration described with reference to Fig 1. The RAN node 2 may have the configuration shown in Fig 18. Each element (or network function) shown in Fig. 18 can be implemented, for example, as a network element on dedicated hardware, as a software instance running on dedicated hardware, or as a virtualized function instantiated on an application platform. The RAN node 2 may include a CU 22 and one or more DUs 23 (e.g., DUs 23A to 23C), as shown in Fig 18. Hereinafter, matters common to the multiple DUs 23A to 23C will be described with reference to DU 23, unless otherwise noted. The CU 22 and each DU 23 are connected via an interface 24. The aerial UE 1 is connected to at least one DU 23 via at least one aerial interface 25.

The CU 22 may be a logical node that hosts the gNB's Radio Resource Control (RRC), Service Data Adaptation Protocol (SDAP), and Packet Data Convergence Protocol (PDCP) protocols (or the gNB's RRC and PDCP protocols). The DU 23 may be a logical node hosting the gNB's Radio Link Control (RLC), Medium Access Control (MAC), and Physical (PHY) layers. If the CU 22 is a gNB-CU and the DU 23 is a gNB-DU, the interface 24 may be an F1 interface. The CU 22 may include a CU-CP and a CU-UP.

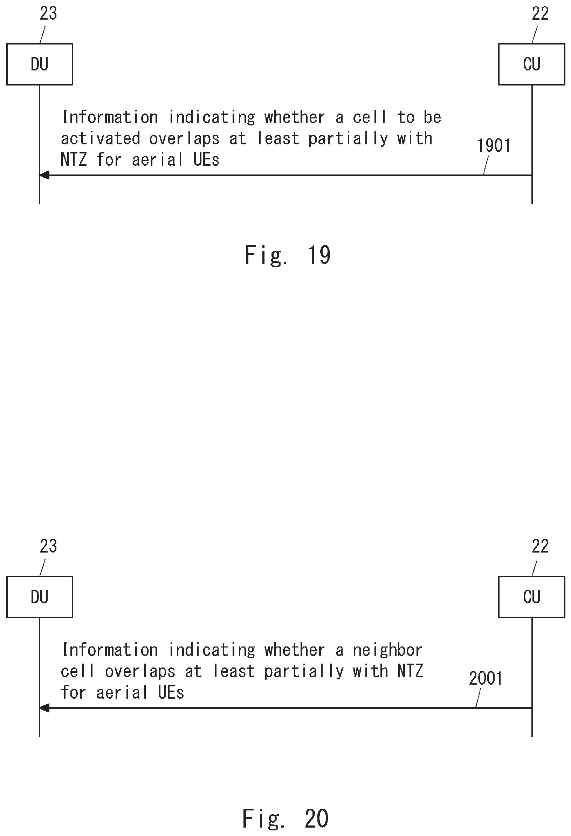

Fig. 19 illustrates an example of signaling between the CU 22 and the DU 23. In step 1901, the CU 22 sends first information to the DU 23 indicating whether a cell 21 provided by or associated with the DU 23 at least partially overlaps with the NTZ 3 for aerial UEs. The CU 22 may send the first information to the DU 23 via an F1 SETUP RESPONSE, a GNB-DU CONFIGURATION UPDATE ACKNOWLEDGE, or a GNB-CU CONFIGURATION UPDATE message. The CU 22 may include the first information in a Cells to be Activated List IE that can be contained in these F1 Application Protocol (F1AP) messages. The Cells to be Activated List IE contains a list of cells that the CU 22 requests the DU 23 to activate.

The DU 23 can use the received first information for various purposes or applications. For example, the DU 23 may consider or use the first information to decide whether to steer the aerial UE 1 in RRC_CONNECTED state in its own cell 21 to another cell. The DU 23 may change the serving cell of the aerial UE 1 using L1/L2-triggered Mobility (LTM). LTM is a procedure where the gNB receives L1 measurement reports from the UE and, based on them, changes one or more serving cells of the UE via L2 signaling, specifically a MAC Control Element (CE).

According to the operation described with reference to Fig. 19, the CU 22 can notify the DU 23 whether the cell 21 provided by or associated with the DU 23 at least partially overlaps with the NTZ 3 for aerial UEs. This helps clarify the signaling details regarding the mechanism enabling aerial UEs to respect the NTZ, particularly concerning aerial UE mobility procedures (e.g., LTM).

Additionally, the CU 22 may send second information to the DU 23 (e.g., DU 23A) indicating whether one or more neighbor cells provided by one or more other DUs 23 (e.g., DUs 23B and 23C) overlap at least partially with the NTZ 3. Fig 20 illustrates an example of signaling between the CU 22 and the DU 23. In step 2001, the CU 22 sends second information to the DU 23 (e.g., DU 23A) indicating whether or not one or more neighbor cells at least partially overlap with the NTZ 3 for aerial UEs. The CU 22 may send the second information to the DU 23 via an F1 SETUP RESPONSE, GNB-DU CONFIGURATION UPDATE ACKNOWLEDGE, or GNB-CU CONFIGURATION UPDATE message. The CU 22 may include the second information in a Neighbour Cell Information List IE that can be contained within these F1 Application Protocol (F1AP) messages.

The DU 23 may use the received second information for various purposes or applications. For example, the DU 23 may consider or use the second information to determine another cell to redirect the aerial UE 1 in RRC_CONNECTED state in its own cell 21. The DU 23 may consider or use the second information to determine a target cell for LTM.

According to the operation described with reference to Fig. 20, the CU 22 can notify the DU 23 whether or not one or more neighbor cells at least partially overlap with the NTZ 3 for aerial UEs. This helps clarify the signaling details regarding the mechanism enabling aerial UEs to respect the NTZ, particularly concerning aerial UE mobility procedures (e.g., LTM).

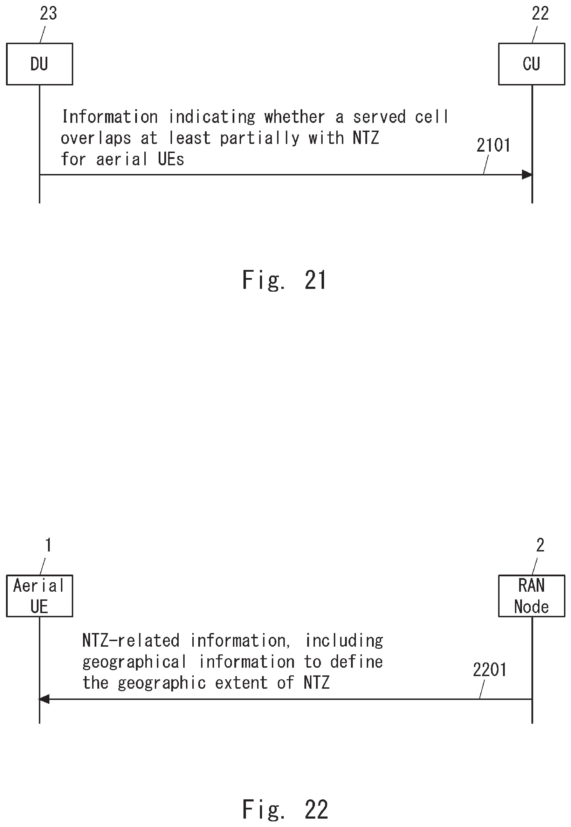

The procedure described in Fig. 19 may be used in cases or scenarios where the CU 22 configures or determines the information regarding whether a cell overlaps at least partially with the NTZ 3. Conversely, cases or scenarios are also conceivable where the DU 23 configures or determines the information regarding whether a cell overlaps at least partially with the NTZ 3. In such cases, the CU 22 and the DU 23 may perform the procedure shown in Fig. 21.

Fig. 21 illustrates an example of signaling between the CU 22 and the DU 23. In step 2101, the DU 23 sends first information to the CU 22 indicating whether a cell 21 that it provides or is associated with overlaps at least partially with the NTZ 3 for aerial UEs. The DU 23 may send the first information to the CU 22 via an F1 SETUP REQUEST or GNB-DU CONFIGURATION UPDATE message. The DU 23 may include the first information in a Served Cell Information IE that can be contained within these F1 Application Protocol (F1AP) messages.

The CU 22 may use the received first information for various purposes or applications. For example, the CU 22 may consider or use the received first information to determine a target cell for intra-CU inter-DU handover or CHO. In intra-CU inter-DU handover or CHO, the CU 22 may attempt to select a target cell that does not overlap, even partially, with the NTZ 3. Additionally or alternatively, the CU 22 may consider or use the received first information to determine the content of system information (e.g., system information described in the first or second example embodiment) broadcast in one or more cells 21 provided by one or more DUs 23. Additionally or alternatively, the CU 22 may consider or use the received first information to determine the contents of an excluded cell list or neighbor cell list specific to aerial UEs (e.g., the excluded cell list or neighbor cell list described in the third or fourth example embodiment). Additionally or alternatively, the CU 22 may consider or use the first information received from a DU 23 to send the aforementioned second information (Fig. 20) to another DU 23.

According to the operation described with reference to Fig. 21, the DU 23 can notify the CU 22 whether a cell 21 provided by or associated with the DU 23 at least partially overlaps with the NTZ 3 for aerial UEs. This helps clarify the signaling details regarding the mechanism enabling aerial UEs to respect the NTZ, particularly concerning aerial UE mobility procedures (e.g., cell reselection, handover, CHO).

### Seventh Example Embodiment

An example configuration of a radio communication system according to this example embodiment is similar to the example configuration described with reference to Fig 1. Fig. 22 illustrates an example of signaling between the aerial UE 1 and the RAN node 2. In step 201, the RAN node 2 transmits, to the aerial UE 1, NTZ-related information containing geographical information for defining the geographic extent of the NTZ 3 for aerial UEs. The NTZ-related information may further contain information (e.g., NR frequency band number(s) or NR Absolute Radio Frequency Channel Numbers (ARFCNs)) indicating one or more frequency bands (e.g., NR operating bands or NR RF carriers) in which aerial UEs are not permitted to transmit in the NTZ 3. The RAN node 2 may broadcast the NTZ-related information via cell-common or area-common system information (e.g., SIB), or may transmit it to the aerial UE 1 via a dedicated RRC message.

The RAN node 2 (e.g., RAN node 2A in Fig. 1) in Fig. 22 may transmit the NTZ-related information to the aerial UE1 in a cell 21 (e.g., cell 21A in Fig. 1) that does not overlap, even partially, with the NTZ 3. Additionally or alternatively, the RAN node 2 (e.g., RAN node 2 in Fig. 1) may transmit the NTZ-related information to the aerial UE1 in a cell 21 (e.g., cell 21B in Fig. 1) that at least partially overlaps with the NTZ 3.

As already described above, there are several examples of the geographical shape of the NTZ 3. Specifically, for example, the NTZ 3 may be defined as a three-dimensional region including a circular-shaped ground area with a predetermined radius centered at a predetermined location (e.g., a RAS site or radar site) and the airspace above it up to a predetermined height. Alternatively, the NTZ 3 may be defined as a spherical three-dimensional region with a predetermined radius centered at a predetermined location. The NTZ 3 may be defined as a three-dimensional region having an ellipsoidal shape centered on a predetermined location. The NTZ 3 may be defined as a three-dimensional region including a square-shaped ground area centered on a predetermined location and the airspace above it up to a predetermined height. The NTZ 3 may be defined as a three-dimensional region having a cubic or rectangular prism shape centered on a predetermined location.

The geographical information for defining the geographic extent of the NTZ 3 includes information necessary to specify these geographic shapes. For example, the geographical information may include information on latitude and longitude to define the location and extent of the geographic range of the NTZ 3. The geographical information may specify the latitude and longitude of the starting and ending points for defining the ground coverage of the NTZ 3, as well as the starting and ending altitudes for defining the altitude range of the NTZ 3. The geographical information may define the two-dimensional shape of the NTZ 3 (e.g., circle, ellipse, quadrilateral), the latitude and longitude of the center point of the two-dimensional shape, and the start height and end height for defining the altitude range of the NTZ 3. The geographical information may also define the three-dimensional shape of the NTZ 3 (e.g., sphere, ellipsoid, cube, rectangular prism) and the latitude and longitude of the center point of the three-dimensional shape.

According to the operation described with reference to Fig. 22, the RAN node 2 can inform the aerial UE 1 of the specific geographic extent of the NTZ 3. This helps clarify the signaling details regarding the mechanism enabling aerial UEs to respect the NTZ. The aerial UE 1 can use or consider the specific geographic extent of the NTZ 3 for various purposes or applications. The following are examples of these purposes or applications.

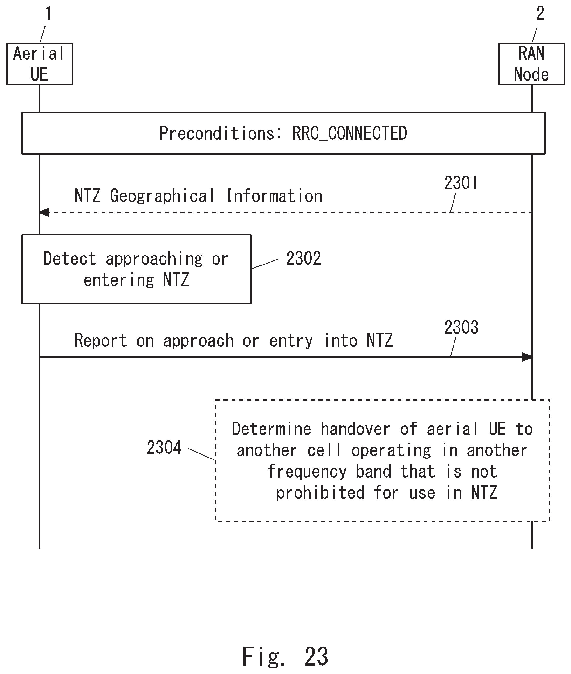

The aerial UE 1 may use or consider the geographical information of the NTZ 3 to transmit a report regarding its approaching or entering the NTZ 3 to the RAN node 2 of the serving cell. The aerial UE 1 may utilize GNSS positioning information to obtain its location. Fig. 23 illustrates an example of the operation of the aerial UE 1 and the RAN node 2. Fig. 23 assumes that the aerial UE 1 is in the RRC_CONNECTED state. In step 2301, the aerial UE 1 may receive, from the serving RAN node 2, geographical information for defining the geographic extent of the NTZ 3. However, step 2301 may be omitted. Specifically, the aerial UE 1 may receive the geographical information about the NTZ 3 from the serving RAN node 2 shown in Fig. 23 in advance while it is in the RRC_IDLE or RRC_INACTIVE state. Alternatively, the aerial UE 1 may have already received the geographical information about the NTZ 3 from a different RAN node 2 before initiating communication with the RAN node 2 shown in Fig. 23.

In step 2302, the aerial UE 1 detects its approaching or entering the NTZ 3 based on the geographical information of the NTZ 3. The aerial UE 1 may detect that it is approaching the NTZ 3, entering the NTZ 3, or has entered the NTZ 3. In step 2303, the aerial UE 1 transmits a report regarding the approach or entry into the NTZ 3 to the RAN node 2 of the serving cell 21. The aerial UE 1 may transmit this report to the RAN node 2 of the serving cell 21 in a case where the serving cell 21 operates in a frequency band that is barred for use in the NTZ 3.

Prior to step 2302, the serving RAN node 2 may configure the aerial UE 1 to send a report regarding its approach to or entry into the NTZ 3. The serving RAN node 2 may configure the aerial UE 1 to send this report in a case where the serving cell 21 operates in a frequency band that is barred for use in the NTZ 3.

For example, to receive reports regarding approach or entry into the NTZ 3, the serving RAN node 2 may use a UE Assistance Information procedure. Specifically, the serving RAN node 2 can configure the aerial UE 1 with an RRCReconfiguration message to report UE Assistance Information. The serving RAN node 2 can configure the aerial UE 1 with a condition or event that triggers the reporting of UE Assistance Information. In this case, the serving RAN node 2 configures the aerial UE 1 with a condition or event that triggers the reporting of UE Assistance Information regarding approach or entry into the NTZ 3. This condition or event may be that the distance between the aerial UE 1 and the NTZ 3 (or the reference position of the NTZ 3) falls below a threshold. The Aerial UE 1 sends a report regarding the approach or entry into the NTZ 3 to the serving RAN node 2 as UE Assistance Information, based on the configuration by the serving RAN node 2. That is, the Aerial UE 1 sends this report to the serving RAN node 2 via a UEAssistanceInformation message.

In another example, to receive reports regarding approach or entry into the NTZ 3, the serving RAN node 2 may use a measurement reporting procedure. Specifically, the serving RAN node 2 can configure the aerial UE 1 with a condition or event that triggers measurement reporting, using an RRCReconfiguration message. In this case, the serving RAN node 2 configures the aerial UE 1 with a condition or event that triggers a measurement report regarding approach to or entry into the NTZ 3. This condition or event may be that the distance between the aerial UE 1 and the NTZ 3 (or the reference position of the NTZ 3) falls below a threshold. The Aerial UE 1 sends a report concerning the approach or entry into the NTZ 3 to the serving RAN node 2 as a measurement report, based on the configuration by the serving RAN node 2. That is, the aerial UE 1 sends the report to the serving RAN node 2 via a MeasurementReport message.

In response to receiving a report regarding approach to or entry into the NTZ 3, the serving RAN node 2 may perform a procedure or take action to continue the uplink communication for the aerial UE 1. For example, as shown in step 2304, based on or in response to receiving a report regarding approaching or entering the NTZ 3, the serving RAN node 2 may handover the aerial UE 1 to another cell operating in a frequency band not prohibited for use in the NTZ 3. Alternatively, the Serving RAN Node 2 may add another cell operating in a frequency band not prohibited for use in the NTZ 3 as a secondary cell group cell for dual connectivity for the aerial UE.

According to the operation shown in Fig. 23, the aerial UE 1 can use or consider the geographical information of the NTZ 3 to send a report to the network regarding its approach to or entry into the NTZ 3. This helps clarify the signaling details concerning the mechanism enabling aerial UEs to respect the NTZ.

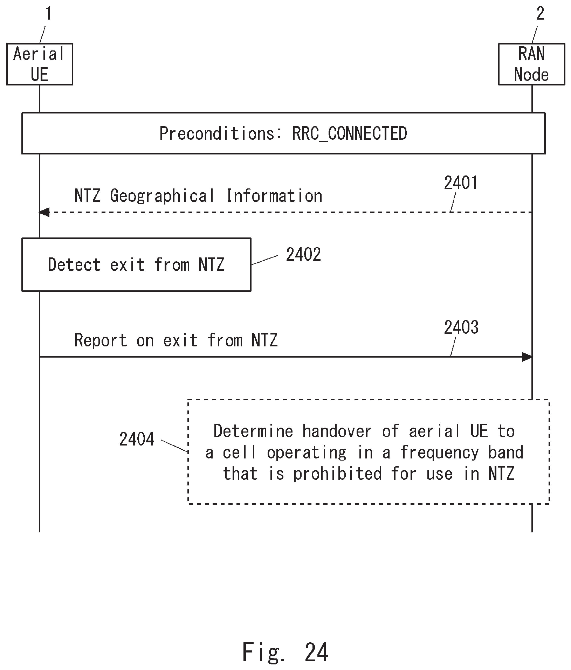

The aerial UE 1 may use or consider the geographical information of the NTZ 3 to transmit a report regarding its exit from the NTZ 3 to the RAN node 2 of the serving cell. The aerial UE 1 may utilize GNSS positioning information to obtain its location. Fig. 24 illustrates an example of the operation of the aerial UE 1 and the RAN node 2. Fig. 24 assumes that the aerial UE 1 is in the RRC_CONNECTED state. In step 2401, the aerial UE 1 may receive, from the serving RAN node 2, geographical information for defining the geographic extent of the NTZ 3. However, step 2401 may be omitted. Specifically, the aerial UE 1 may receive the geographical information about the NTZ 3 from the serving RAN node 2 shown in Fig. 24 in advance while it is in the RRC_IDLE or RRC_INACTIVE state. Alternatively, the aerial UE 1 may have already received the geographical information about the NTZ 3 from a different RAN node 2 before initiating communication with the RAN node 2 shown in Fig. 24.

In step 2402, the aerial UE 1 detects its exit from the NTZ 3 based on the geographical information of the NTZ 3. The aerial UE 1 may detect that it is exiting the NTZ 3 or that it has exited the NTZ 3. In step 2403, the aerial UE 1 transmits a report regarding the exit from the NTZ 3 to the RAN node 2 of the serving cell 21.

Prior to step 2402, the serving RAN node 2 may configure the aerial UE 1 to send a report regarding its exit from the NTZ 3. The serving cell 21 may be a cell operating in a frequency band not prohibited for use in the NTZ 3. Alternatively, the serving cell 21 may be a cell operating in a frequency band prohibited for use in the NTZ 3. In this case, the serving RAN node 2 may send the configuration for this report to the UE 1 in the serving cell 21 while the aerial UE 1 is still outside the NTZ 3. Similar to the example in Fig. 23, the serving RAN node 2 may utilize a UE Assistance Information procedure or a measurement reporting procedure to receive the report regarding exit from the NTZ 3.

In response to receiving a report regarding exit from the NTZ 3, the serving RAN node 2 may perform a procedure or take action to restore or resume the previous uplink communication of the aerial UE 1. For example, as shown in step 2404, the serving RAN node 2 may handover the aerial UE 1 to another cell operating in a frequency band prohibited for use in the NTZ 3.

According to the operation shown in Fig. 24, the aerial UE 1 can use or consider the geographical information of the NTZ 3 to send a report to the network regarding its exit from the NTZ 3. This helps clarify the signaling details regarding the mechanism enabling aerial UEs to respect the NTZ.

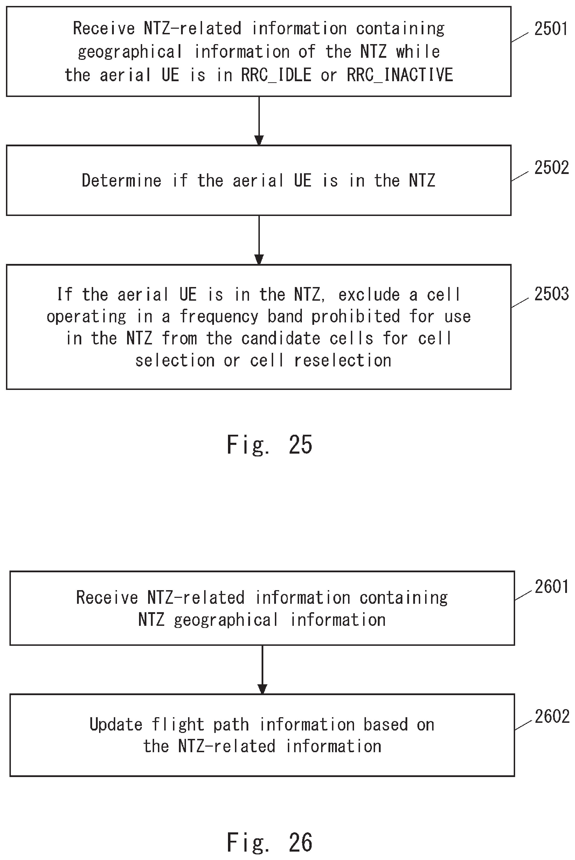

The aerial UE 1 may use or consider the geographical information of the NTZ 3 for cell selection or cell selection while it is in the RRC_IDLE or RRC_INACTIVE state. Fig. 25 illustrates an example of the operation of the aerial UE 1. In step 2501, the aerial UE 1 receives NTZ-related information containing the geographical information of the NTZ 3 while the aerial UE 1 is in the RRC_IDLE or RRC_INACTIVE state. In step 2502, the aerial UE 1 determines if the aerial UE 1 is in the NTZ 3. The aerial UE 1 may utilize GNSS positioning information to obtain its location. In step 2503, if the aerial UE 1 is in the NTZ 3, it excludes a cell operating in a frequency band prohibited for use in the NTZ 3 from the candidate cells for cell selection or cell reselection. In other words, if the aerial UE 1 is in the NTZ 3, it treats a cell operating in a frequency band prohibited for use in the NTZ 3 as a barred cell during cell selection or cell reselection.

According to the operation shown in Fig. 25, the aerial UE 1 can use or consider the geographical information of the NTZ 3 for cell selection or cell reselection. This helps clarify the details on how aerial UEs operate in relation to the mechanism that enables them to respect the NTZ.

The aerial UE 1 may use or consider the geographical information of the NTZ 3 to update its flight path information. Fig. 26 illustrates an example of the operation of the aerial UE 1. In step 2601, the aerial UE 1 receives NTZ-related information containing the geographical information of the NTZ 3. The aerial UE 1 may receive the NTZ-related information while the aerial UE 1 is in the RRC_IDLE or RRC_INACTIVE state. Alternatively, the aerial UE 1 may receive the NTZ-related information via a dedicated RRC message (e.g., an RRCReconfiguration message) while the aerial UE 1 is in the RRC_CONNECTED state.

In Step 2602, the aerial UE 1 updates its flight path information based on the NTZ-related information. For example, the aerial UE 1 may update its flight path information to avoid the NTZ 3. The flight path information includes a plurality of waypoints defined as three-dimensional positions.

The aerial UE 1 may report the updated flight path information to the network (e.g., RAN node 2). The trigger condition for reporting the updated flight path information is not specifically limited. For example, the trigger condition may be an update to the flight path information. The trigger condition may be a trigger based on a threshold for the number of updated or changed waypoints. Alternatively, the trigger condition may be a periodic trigger based on a timer. Alternatively, the trigger condition may be a distance-based event trigger.

According to the operation shown in Fig. 25, the aerial UE 1 can use or consider the geographical information of the NTZ 3 to update its flight path. This helps clarify the details on how aerial UEs operate in relation to the mechanism that enables them to respect the NTZ.

The aerial UE 1 may use or consider the geographical information of the NTZ 3 to send a flight path update notification to the network (e.g., RAN node 2). In this specification, the flight path update notification may be a notification that flight path information is available. In other words, the flight path update notification may not involve an update to the flight path information. Therefore, the flight path update notification may be referred to as a flight path availability notification.

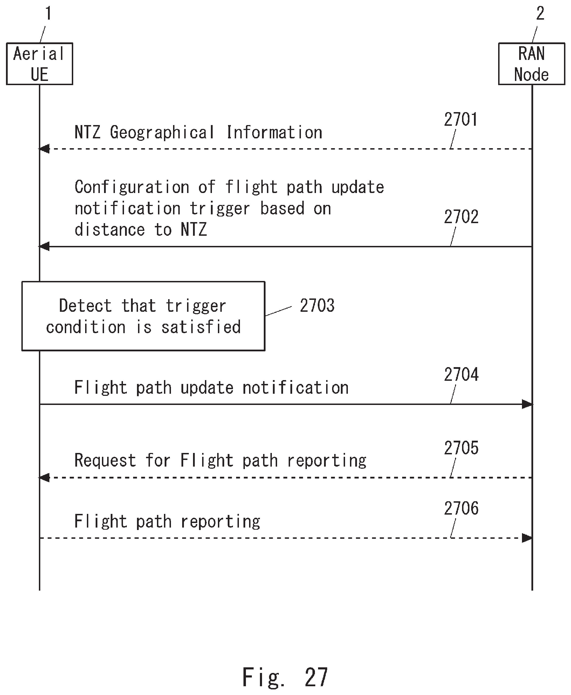

Fig. 27 illustrates an example of the operation of the aerial UE 1 and the RAN node 2. In step 2701, the aerial UE 1 receives, from the serving RAN node 2, geographical information for defining the geographical extent of the NTZ 3. The aerial UE 1 may receive the geographical information via broadcast in the serving cell 21 while the aerial UE 1 is in the RRC_IDLE or RRC_INACTIVE state. Alternatively, the aerial UE 1 may receive the geographical information via a UE-specific RRC message (e.g., an RRCReconfiguration message) while the aerial UE 1 is in the RRC_CONNECTED state. However, step 2701 may be omitted. Specifically, the aerial UE 1 may have received the geographical information of the NTZ 3 from another RAN node 2 before initiating communication with the RAN node 2 shown in Fig. 27.

In step 2702, the serving RAN node 2 transmits a configuration to the aerial UE 1 for configuring a flight path update notification trigger that is based on the distance to the NTZ 3. In other words, the serving RAN node 2 configures the aerial UE 1 with a condition or event that is based on the distance to the NTZ 3 to trigger the transmission of a flight path update notification. This condition may be that the distance between the aerial UE 1 and the NTZ 3 (or the reference position of the NTZ 3) falls below a threshold. Alternatively, this condition may be that the distance between the aerial UE 1 and the NTZ 3 (or the reference position of the NTZ 3) exceeds a threshold. The serving RAN node 2 may broadcast the configuration of the flight path update notification trigger via system information (e.g., SIB) in the cell 21. Alternatively, the serving RAN node 2 may configure the flight path update notification trigger in the aerial UE 1 via a UE-specific RRC message (e.g., RRCReconfiguration message).

In step 2703, the aerial UE 1 detects that the configured trigger condition has been met. In step 2704, in response to the fulfillment of the trigger condition, the aerial UE 1 transmits a flight path update notification to the serving RAN node 2.

The flight path update notification (or flight path availability notification) can be transmitted via various RRC messages. For example, the aerial UE 1 can indicate to the serving RAN node 2 whether it is a flight path update notification (or flight path availability notification) via an RRCReconfigurationComplete, RRCReestablishmentComplete, RRCResumeComplete, or RRCSetupComplete message. Additionally or alternatively, the flight path update notification (or flight path availability notification) may be transmitted using a UE Assistance Information procedure. Specifically, the aerial UE 1 in the RRC_CONNECTED state may send the flight path update notification or indication to the network via a UE Assistance Information message, based on a configuration by the serving RAN node 2.

As shown in step 2705, upon receiving the flight path update notification (or flight path availability notification), the serving RAN node 2 may request the aerial UE 1 to report flight path information. The Serving RAN Node 2 may request this using a UEInformationRequest message. In response to this request, in step 2706, the aerial UE 1 may transmit flight path information to the network. The aerial UE 1 may send the flight path information to the network using a UEInformationResponse message. The flight information may contain only a delta report (i.e., the difference from the previous report).

According to the operation shown in Fig. 27, the aerial UE 1 can use or consider the geographical information of the NTZ 3 for triggering the transmission of a flight path update notification (or flight path availability notification). This helps clarify the details on how aerial UEs operate in relation to the mechanism that enables them to respect the NTZ.

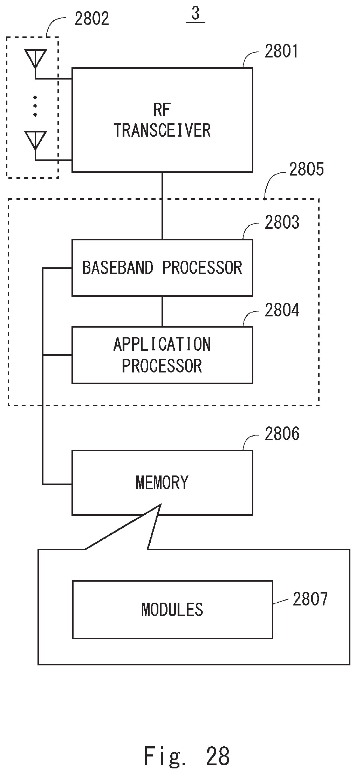

The following describes example configurations of the aerial UE 1 and the RAN node 2 according to the multiple example embodiments described above. Fig. 28 shows a block diagram of an example configuration of the aerial UE 1. The Radio Frequency (RF) transceiver 2801 performs analog RF signal processing to communicate with RAN nodes including the RAN node 2. The RF transceiver 2801 may include a plurality of transceivers. The analog RF signal processing performed by the RF transceiver 2801 includes frequency up-conversion, frequency down-conversion, and amplification. The RF transceiver 2801 is coupled with an antenna array 2802 and a baseband processor 2803. The RF transceiver 2801 receives modulated symbol data (or orthogonal frequency-division multiplexing (OFDM) symbol data) from the baseband processor 2803, generates a transmission RF signal, and supplies the transmission RF signal to the antenna array 2802. The RF transceiver 2801 also generates a baseband received signal based on a received RF signal received by the antenna array 2802, and supplies the baseband received signal to the baseband processor 2803. The RF transceiver 2801 may include an analog beamformer circuit for beamforming. The analog beamformer circuit includes, for example, multiple phase shifters and multiple power amplifiers.

The baseband processor 2803 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 2803 may include signal processing for the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. The control plane processing performed by the baseband processor 2803 may include processing of the Non-Access Stratum (NAS) protocol, the RRC protocol, MAC CEs, and Downlink Control Information (DCI).

The baseband processor 2803 may perform Multiple Input Multiple Output (MIMO) encoding and precoding for beamforming.

The baseband processor 2803 may include a modem processor (e.g., a digital signal processor (DSP)) that performs digital baseband signal processing and a protocol stack processor (e.g., a central processing unit (CPU) or a micro processing unit (MPU)) that performs control plane processing. In this case, the protocol stack processor that performs control plane processing may be integrated with an application processor 2804 described later.

The application processor 2804 is also referred to as a CPU, MPU, microprocessor, or processor core. The application processor 2804 may include a plurality of processors (a plurality of processor cores). The application processor 2804 executes a system software program (operating system (OS)) and various application programs (e.g., call application, web browser, mailer, camera operation application, music player application) read from a memory 2806 or from unillustrated memory, thereby realizing various functions of the aerial UE 1.

In some implementations, as shown by the dashed line (2805) in Fig. 28, the baseband processor 2803 and the application processor 2804 may be integrated on a single chip. In other words, the baseband processor 2803 and the application processor 2804 may be implemented as a single System on Chip (SoC) device 2805. The SoC device may also be referred to as a system large-scale integration (LSI) or chipset.

The memory 2806 is a volatile memory or a non-volatile memory or a combination thereof. The memory 2806 may include a plurality of physically independent memory devices. The volatile memory is, for example, Static Random Access Memory (SRAM), Dynamic RAM (DRAM), or a combination thereof. The non-volatile memory is, for example, Mask Read Only Memory (MROM), Electrically Erasable Programmable ROM (EEPROM), flash memory, or a hard disk drive, or any combination thereof. For example, the memory 2806 may include an external memory device that is accessible by the baseband processor 2803, the application processor 2804, and the SoC 2805. The memory 2806 may include an internal memory device that is integrated into the baseband processor 2803, the application processor 2804, or the SoC 2805. In addition, the memory 2806 may include memory within a Universal Integrated Circuit Card (UICC).

The memory 2806 may store one or more software modules (or computer programs) 2807 that include a set of instructions and data for performing the processing by the UE 1 described in the above example embodiments. In some implementations, the baseband processor 2803 or the application processor 2804 may be configured to read and execute the software modules 2807 from the memory 2806, thereby performing the processing of the UE 1 as described in the example embodiments with reference to the drawings.

The control plane processing and operations performed by the UE 1 described in the above example embodiment may be implemented by elements other than the RF transceiver 2801 and the antenna array 2802, namely at least one of the baseband processor 2803 and the application processor 2804, and the memory 2806 that stores the software modules 2807.

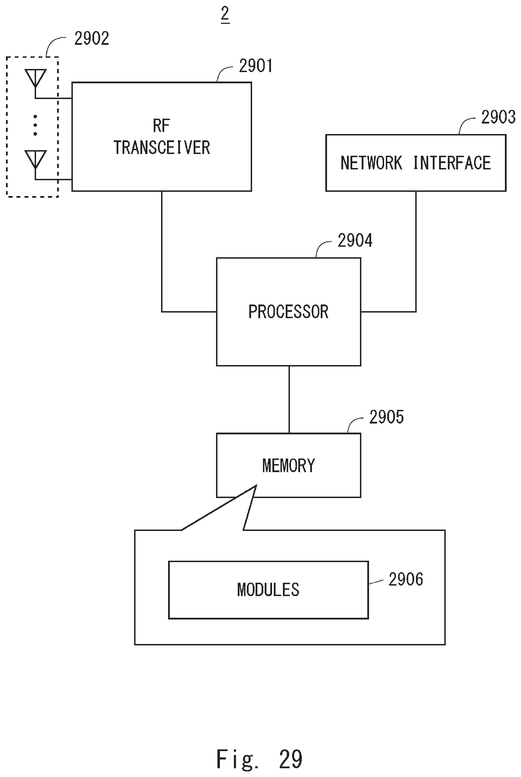

Fig. 29 is a block diagram showing an example of the configuration of the RAN node 2 according to the example embodiments described above. Referring to Fig. 29, the RAN node 2 includes an RF transceiver 2901, a network interface 2903, a processor 2904, and a memory 2905. The RF transceiver 2901 performs analog RF signal processing to communicate with UEs including the UE 1. The RF transceiver 2901 may include a plurality of transceivers. The RF transceiver 2901 is coupled to an antenna array 2902 and the processor 2904. The RF transceiver 2901 receives modulated symbol data from the processor 2904, generates a transmission RF signal, and supplies the transmission RF signal to the antenna array 2902. The RF transceiver 2901 generates a baseband reception signal based on a reception RF signal received by the antenna array 2902 and supplies the baseband reception signal to the processor 2904. The RF transceiver 2901 may include an analog beamformer circuit for beamforming. The analog beamformer circuit includes, for example, a plurality of phase shifters and a plurality of power amplifiers.

The network interface 2903 is used to communicate with network nodes (e.g., other RAN nodes, as well as control nodes and transfer nodes in the core network). For example, the network interface 2903 may include a network interface card (NIC) conforming to the IEEE 802.3 series.

The processor 2904 performs digital baseband signal processing (data plane processing) and control plane processing for radio communication. The processor 2904 may include a plurality of processors. For example, the processor 2904 may include a modem processor (e.g., DSP) that performs digital baseband signal processing and a protocol stack processor (e.g., CPU or MPU) that performs control plane processing.

For example, digital baseband signal processing by the processor 2904 may include signal processing of the SDAP, PDCP, Radio RLC, MAC, and PHY layers. Control plane processing by the processor 2904 may include processing of NAS messages, RRC messages, MAC CEs, and DCIs.

The processor 2904 may include a digital beamformer module for beamforming. The digital beamformer module may include a MIMO encoder and precoder.

The memory 2905 is composed of a combination of a volatile memory and a non-volatile memory. The volatile memory is, for example, SRAM or DRAM or a combination thereof. The non-volatile memory is MROM, EEPROM, flash memory, or a hard disk drive, or any combination thereof. The memory 2905 may include storage located separate from the processor 2904. In this case, the processor 2904 may access the memory 2905 via a network interface 2903 or unillustrated I/O interface.

The memory 2905 may store one or more software modules (computer programs) 2906 containing instructions and data for performing the processing by the RAN node 2 described in the above example embodiments. In some implementations, the processor 2904 may be configured to execute the software modules 2906 read from the memory 2905, thereby performing the processing of the RAN node 2 described in the above example embodiments.

In a case where the RAN node 2 is a CU (e.g., eNB-CU or gNB-CU) or a CU-CP, the RAN node 2 may not include the RF transceiver 2901 (and the antenna array 2902) and an LP-WUS transmitter 1810.

As explained using Figs. 28 and 29, each of the processors of the aerial UE 1 and RAN node 2 in the above example embodiments can execute one or more programs, containing a set of instructions, to cause a computer to perform an algorithm described with reference to the drawings. Each of these programs contains a set of instructions (or software codes) that, if loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to an apparatus (e.g., aerial UE or RAN node) may also be described as or in Supplementary Notes directed to methods and programs. For example, some or all of the elements listed in Supplementary Notes 2-10 that depend on Supplementary Note 1 may also be listed as Supplementary Notes that depend on Supplementary Note 11 or 12 with the same dependency as Supplementary Notes 2-10. Some or all of the elements described in a Supplementary Note may be applicable to various hardware, software, storage for storing software, systems, and methods.

### (Supplementary Note 1)

An aerial User Equipment (UE) comprising:
means for receiving system information via broadcast in a first cell;
means for treating the first cell as a barred cell in cell selection or cell reselection, if the system information contains first information indicating whether the first cell is barred to aerial UEs and if the first information indicates that the first cell is barred to aerial UEs;
means for not treating the first cell as a barred cell in cell selection or cell reselection, if the system information contains the first information and if the first information indicates that the first cell is not barred for aerial UEs; and
means for not treating the first cell as a barred cell in cell selection or cell reselection if the system information does not contain the first information.

### (Supplementary Note 2)

The aerial UE according to Supplementary Note 1, wherein the first cell is a cell that is included in or partially overlaps with a no-transmit zone (NTZ) for aerial UEs, and whose uplink frequency falls within a frequency band that is prohibited in the NTZ.

### (Supplementary Note 3)

The aerial UE according to Supplementary Note 2, wherein the NTZ is a geographical area where aerial UEs are not allowed to transmit in one or more specific frequency bands.

### (Supplementary Note 4)

The aerial UE according to any one of Supplementary Notes 1 to 3, wherein the first information is applied to all Public Land Mobile Networks (PLMNs) and Non-Public Networks (NPNs) associated with the first cell.

### (Supplementary Note 5)

The aerial UE according to any one of Supplementary Notes 1 to 4, wherein the system information is System Information Block type 1 (SIB1).

### (Supplementary Note 6)

The aerial UE according to any one of Supplementary Notes 1 to 5, further comprising means for receiving in the first cell an excluded cell list specific to aerial UEs,
wherein the excluded cell list indicates one or more neighbor cells to be excluded from candidate cells for cell reselection by aerial UEs.

### (Supplementary Note 7)

The aerial UE according to Supplementary Note 6, wherein the means for receiving the excluded cell list is adapted to receive the excluded cell list via a SIB type 3 (SIB3) or a SIB type 4 (SIB4).

### (Supplementary Note 8)

The aerial UE according to Supplementary Note 2 or 3, further comprising means for receiving, in the first cell, geographical information for defining geographical extent of the NTZ.

### (Supplementary Note 9)

The aerial UE according to Supplementary Note 8, wherein the geographical information includes latitude and longitude information to define a location and extent of the geographic extent.

### (Supplementary Note 10)

The aerial UE according to Supplementary Note 2, 3, 7, or 8, further comprising means for receiving, in the first cell, information indicating one or more frequency bands in which transmission by aerial UEs is not allowed in the NTZ.

### (Supplementary Note 11)

A method performed by an aerial User Equipment (UE), the method comprising:
receiving system information via broadcast in a first cell;
treating the first cell as a barred cell in cell selection or cell reselection, if the system information contains first information indicating whether the first cell is barred to aerial UEs and if the first information indicates that the first cell is barred to aerial UEs;
not treating the first cell as a barred cell in cell selection or cell reselection, if the system information contains the first information and if the first information indicates that the first cell is not barred for aerial UEs; and
not treating the first cell as a barred cell in cell selection or cell reselection if the system information does not contain the first information.

### (Supplementary Note 12)

A program for causing a computer to perform a method for an aerial User Equipment (UE), the method comprising:
receiving system information via broadcast in a first cell;
treating the first cell as a barred cell in cell selection or cell reselection, if the system information contains first information indicating whether the first cell is barred to aerial UEs and if the first information indicates that the first cell is barred to aerial UEs;
not treating the first cell as a barred cell in cell selection or cell reselection, if the system information contains the first information and if the first information indicates that the first cell is not barred for aerial UEs; and
not treating the first cell as a barred cell in cell selection or cell reselection if the system information does not contain the first information.

### (Supplementary Note 13)

An aerial User Equipment (UE) comprising:
means for receiving first information via broadcast in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

### (Supplementary Note 14)

The aerial UE according to Supplementary Note 13, wherein the NTZ is a geographical area where aerial UEs are not allowed to transmit in one or more specific frequency bands.

### (Supplementary Note 15)

The aerial UE according to Supplementary Note 13 or 14, wherein the first information is applied to all Public Land Mobile Networks (PLMNs) and Non-Public Networks (NPNs) associated with the first cell.

### (Supplementary Note 16)

The aerial UE according to any one of Supplementary Notes 13 to 15, wherein the first information is contained in a System Information Block type 1 (SIB1) broadcast in the first cell.

### (Supplementary Note 17)

The aerial UE according to any one of Supplementary Notes 13 to 16, wherein the first cell is a cell that is included in or partially overlaps with the NTZ, and whose uplink frequency falls within a frequency band that is prohibited in the NTZ.

### (Supplementary Note 18)

The aerial UE according to any one of Supplementary Notes 13 to 17, further comprising means for receiving in the first cell a neighbor cell list specific to aerial UEs,
wherein each of one or more cells included in the neighbor cell list is a cell belonging to or containing an NTZ; a cell where uplink transmission is not permitted to aerial UEs; or a cell that provides downlink communication services to aerial UEs but does not provide uplink communication services to aerial UEs.

### (Supplementary Note 19)

The aerial UE according to Supplementary Note 18, wherein the means for receiving the neighbor cell list is adapted to receive the neighbor cell list via system information broadcast in the first cell.

### (Supplementary Note 20)

The aerial UE according to Supplementary Note 18 or 19, further comprising means for excluding a cell included in the neighbor cell list from candidate cells for selecting cells for cell reselection.

### (Supplementary Note 21)

The aerial UE according to any one of Supplementary Notes 18 to 20, further comprising means for excluding a cell included in the neighbor cell list from primary cell candidates for carrier aggregation.

### (Supplementary Note 22)

The aerial UE according to any one of Supplementary Notes 13 to 21, further comprising means for receiving, in the first cell, geographical information for defining geographical extent of the NTZ.

### (Supplementary Note 23)

The aerial UE according to Supplementary Note 22, wherein the geographical information includes latitude and longitude information to define a location and extent of the geographic extent.

### (Supplementary Note 24)

The aerial UE according to any one of Supplementary Notes 13 to 23, further comprising means for receiving, in the first cell, information indicating one or more frequency bands in which transmission by aerial UEs is not allowed in the NTZ.

### (Supplementary Note 25)

A radio access network (RAN) node comprising:
means for broadcasting first information in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

### (Supplementary Note 26)

The RAN node according to Supplementary Note 25, wherein the NTZ is a geographical area where aerial UEs are not allowed to transmit in one or more specific frequency bands.

### (Supplementary Note 27)

The RAN node according to Supplementary Note 25 or 26, wherein the first information is applied to all Public Land Mobile Networks (PLMNs) and Non-Public Networks (NPNs) associated with the first cell.

### (Supplementary Note 28)

The RAN node according to any one of Supplementary Notes 25 to 27, wherein the first information is contained in a System Information Block type 1 (SIB1) broadcast in the first cell.

### (Supplementary Note 29)

The RAN node according to any one of Supplementary Notes 25 to 28, wherein the first cell is a cell that is included in or partially overlaps with the NTZ, and whose uplink frequency falls within a frequency band that is prohibited in the NTZ.

### (Supplementary Note 30)

The RAN node according to any one of Supplementary Notes 25 to 29, further comprising means for transmitting in the first cell a neighbor cell list specific to aerial UEs,
wherein each of one or more cells included in the neighbor cell list is a cell belonging to or containing an NTZ; a cell where uplink transmission is not permitted to aerial UEs; or a cell that provides downlink communication services to aerial UEs but does not provide uplink communication services to aerial UEs.

### (Supplementary Note 31)

The RAN node according to Supplementary Note 30, wherein the means for transmitting the neighbor cell list is adapted to transmit the neighbor cell list via system information broadcast in the first cell.

### (Supplementary Note 32)

The RAN node according to any one of Supplementary Notes 25 to 31, further comprising means for transmitting, in the first cell, geographical information for defining geographical extent of the NTZ.

### (Supplementary Note 33)

The RAN node according to Supplementary Note 32, wherein the geographical information includes latitude and longitude information to define a location and extent of the geographic extent.

### (Supplementary Note 34)

The RAN node according to any one of Supplementary Notes 25 to 33, further comprising means for transmitting, in the first cell, information indicating one or more frequency bands in which transmission by aerial UEs is not allowed in the NTZ.

### (Supplementary Note 35)

The RAN node according to any one of Supplementary Notes 25 to 34, further comprising means for sending first information indicating whether the first cell overlaps at least partially with the NTZ to a neighboring RAN node, and for receiving second information indicating whether a second cell of the neighboring RAN node overlaps at least partially with the NTZ from the neighboring RAN node.

### (Supplementary Note 36)

The RAN node according to any one of Supplementary Notes 25 to 35, wherein the RAN node comprises a central unit and a distributed unit,
wherein the central unit is configured to send information to the distributed unit indicating whether a cell provided by the distributed unit overlaps at least partially with the NTZ.

### (Supplementary Note 37)

The RAN node according to any one of Supplementary Notes 25 to 35, wherein the RAN node comprises a central unit and a distributed unit,
wherein the distributed unit is configured to send information to the central unit indicating whether a cell provided by the distributed unit overlaps at least partially with the NTZ.

### (Supplementary Note 38)

A method performed by an aerial User Equipment (UE), the method comprising:
receiving first information via broadcast in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

### (Supplementary Note 39)

A method performed by a radio access network (RAN) node, the method comprising:
broadcasting first information in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

### (Supplementary Note 40)

A program for causing a computer to perform a method for an aerial User Equipment (UE), the method comprising:
receiving first information via broadcast in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

### (Supplementary Note 41)

A program for causing a computer to perform a method for a radio access network (RAN) node, the method comprising:
broadcasting first information in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

### (Supplementary Note 42)

An aerial User Equipment (UE) comprising:
means for receiving in a first cell an excluded cell list specific to aerial UEs,
wherein the excluded cell list indicates one or more neighbor cells to be excluded from candidate cells for cell reselection by aerial UEs.

### (Supplementary Note 43)

The aerial UE according to Supplementary Note 42, wherein the means for receiving is adapted to receive the excluded cell list via a SIB type 3 (SIB3) or a SIB type 4 (SIB4).

### (Supplementary Note 44)

The aerial UE according to Supplementary Note 42 or 43, further comprising means for excluding one or more cells included in the excluded cell list from candidate cells for cell reselection.

### (Supplementary Note 45)

The aerial UE according to any one of Supplementary Notes 42 to 44, further comprising means for excluding a cell included in the excluded cell list from primary cell candidates for carrier aggregation.

### (Supplementary Note 46)

The aerial UE according to any one of Supplementary Notes 42 to 45, wherein each of one or more cells contained in the excluded cell list is a cell that is included in or partially overlaps with a no-transmit zone (NTZ) for aerial UEs, and whose uplink frequency falls within a frequency band that is prohibited in the NTZ.

### (Supplementary Note 47)

The aerial UE according to Supplementary Note 46, wherein the NTZ is a geographical area where aerial UEs are not allowed to transmit in one or more specific frequency bands.

### (Supplementary Note 48)

A radio access network (RAN) node comprising:
means for transmitting in a first cell an excluded cell list specific to aerial UEs,
wherein the excluded cell list indicates one or more neighbor cells to be excluded from candidate cells for cell reselection by aerial UEs.

### (Supplementary Note 49)

The RAN node according to Supplementary Note 48, further comprising means for including in the excluded cell list one or more cells that are included in or partially overlap with a no-transmit zone (NTZ) for aerial UEs, and whose uplink frequencies fall within a frequency band that is prohibited in the NTZ.

### (Supplementary Note 50)

The RAN node according to Supplementary Note 48 or 49, wherein the NTZ is a geographical area where aerial UEs are not allowed to transmit in one or more specific frequency bands.

### (Supplementary Note 51)

The RAN node according to any one of Supplementary Notes 48 to 50, wherein the means for transmitting is adapted to transmit the excluded cell list via a SIB type 3 (SIB3) or a SIB type 4 (SIB4).

### (Supplementary Note 52)

A method performed by an aerial User Equipment (UE), the method comprising:
receiving in a first cell an excluded cell list specific to aerial UEs,
wherein the excluded cell list indicates one or more neighbor cells to be excluded from candidate cells for cell reselection by aerial UEs.

### (Supplementary Note 53)

A method performed by a radio access network (RAN) node, the method comprising:
transmitting in a first cell an excluded cell list specific to aerial UEs,
wherein the excluded cell list indicates one or more neighbor cells to be excluded from candidate cells for cell reselection by aerial UEs.

### (Supplementary Note 54)

A program for causing a computer to perform a method for an aerial User Equipment (UE), the method comprising:
receiving in a first cell an excluded cell list specific to aerial UEs,
wherein the excluded cell list indicates one or more neighbor cells to be excluded from candidate cells for cell reselection by aerial UEs.

### (Supplementary Note 55)

A program for causing a computer to perform a method for a radio access network (RAN) node, the method comprising:
transmitting in a first cell an excluded cell list specific to aerial UEs,
wherein the excluded cell list indicates one or more neighbor cells to be excluded from candidate cells for cell reselection by aerial UEs.

### (Supplementary Note 56)

An aerial User Equipment (UE) comprising:
means for receiving in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

### (Supplementary Note 57)

The aerial UE according to Supplementary Note 56, wherein the means for receiving is adapted to receive the neighbor cell list via system information broadcast in the first cell.

### (Supplementary Note 58)

The aerial UE according to Supplementary Note 56 or 57, further comprising means for excluding one or more cells included in the neighbor cell list from candidate cells for cell reselection.

### (Supplementary Note 59)

The aerial UE according to any one of Supplementary Notes 56 to 58, further comprising means for excluding a cell included in the neighbor cell list from primary cell candidates for carrier aggregation.

### (Supplementary Note 60)

The aerial UE according to any one of Supplementary Notes 56 to 59, wherein the NTZ is a geographical area where aerial UEs are not allowed to transmit in one or more specific frequency bands.

### (Supplementary Note 61)

A radio access network (RAN) node comprising:
means for transmitting in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

### (Supplementary Note 62)

The RAN node according to Supplementary Note 61, further comprising means for including in the neighbor cell list one or more cells that are included in or partially overlap with the NTZ, and whose uplink frequencies fall within a frequency band that is prohibited in the NTZ.

### (Supplementary Note 63)

The RAN node according to Supplementary Note 61 or 62, wherein the NTZ is a geographical area where aerial UEs are not allowed to transmit in one or more specific frequency bands.

### (Supplementary Note 64)

The RAN node according to any one of Supplementary Notes 61 to 63, wherein the means for transmitting is adapted to transmit the neighbor cell list via system information broadcast in the first cell.

### (Supplementary Note 65)

A method performed by an aerial User Equipment (UE), the method comprising:
receiving in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

### (Supplementary Note 66)

A method performed by a radio access network (RAN) node, the method comprising:
transmitting in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

### (Supplementary Note 67)

A program for causing a computer to perform a method for an aerial User Equipment (UE), the method comprising:
receiving in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

### (Supplementary Note 68)

A program for causing a computer to perform a method for a radio access network (RAN) node, the method comprising:
transmitting in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

### (Supplementary Note 69)

A radio access network (RAN) node comprising:
means for sending first information indicating whether a first cell of the RAN node overlaps at least partially with a no-transmission zone (NTZ) for aerial UEs to a neighboring RAN node, and for receiving second information indicating whether a second cell of the neighboring RAN node overlaps at least partially with the NTZ from the neighboring RAN node.

### (Supplementary Note 70)

The RAN node according to Supplementary Note 69, further comprising means for sending third information to the neighboring RAN node indicating that whether each of one or more neighbor cells of the first cell overlaps at least partially with the NTZ.

### (Supplementary Note 71)

The RAN node according to Supplementary Note 69 or 70, wherein the means is adapted to send the first information to the neighboring RAN node via an XN SETUP REQUEST, XN SETUP RESPONSE, NG-RAN NODE CONFIGURATION UPDATE, NG-RAN NODE CONFIGURATION UPDATE ACKNOWLEDGE, or ACCESS AND MOBILITY INDICATION message.

### (Supplementary Note 72)

The RAN node according to any one of Supplementary Notes 69 to 71, further comprising means for determining a target cell for a handover of an aerial UE, considering the second information.

### (Supplementary Note 73)

The RAN node according to Supplementary Note 72, wherein the means for determining is adapted to select a cell that does not even partially overlap with the NTZ as the target cell.

### (Supplementary Note 74)

The RAN node according to Supplementary Note 72 or 73, further comprising means for transmitting a message to the aerial UE to release a Radio Resource Control (RRC) connection of the aerial UE if the target cell cannot be selected,
wherein the message indicates to the aerial UE that a cause of the release of the RRC connection is entry into the NTZ.

### (Supplementary Note 75)

The RAN node according to any one of Supplementary Notes 69 to 74, further comprising:
means for generating an excluded cell list specific to aerial UEs, taking into account the second information; and
means for broadcasting the excluded cell list in the first cell,
wherein the excluded cell list indicates one or more neighbor cells to be excluded from candidate cells for cell reselection by aerial UEs.

### (Supplementary Note 76)

The RAN node according to Supplementary Note 75, wherein the means for generating is adapted to include in the excluded cell list a cell that overlaps at least partially with the NTZ, and whose uplink frequency falls within a frequency band that is prohibited in the NTZ.

### (Supplementary Note 77)

The RAN node according to any one of Supplementary Notes 69 to 76, further comprising:
means for generating a neighbor cell list specific to aerial UEs, taking into account the second information; and
means for broadcasting the neighbor cell list in the first cell,
wherein each of one or more cells included in the neighbor cell list is a cell belonging to or containing the NTZ; a cell where uplink transmission is not permitted to aerial UEs; or a cell that provides downlink communication services to aerial UEs but does not provide uplink communication services to aerial UEs.

### (Supplementary Note 78)

The RAN node according to Supplementary Note 77, wherein the neighbor cell list causes aerial UEs to exclude one or more cells included in the neighbor cell list from candidate cells for cell reselection.

### (Supplementary Note 79)

The RAN node according to Supplementary Note 77 or 78, wherein the neighbor cell list causes aerial UEs to exclude one or more cells included in the neighbor cell list from primary cell candidates for carrier aggregation.

### (Supplementary Note 80)

The RAN node according to any one of Supplementary Notes 69 to 79, wherein the NTZ is a geographical area where aerial UEs are not allowed to transmit in one or more specific frequency bands.

### (Supplementary Note 81)

A method performed by a radio access network (RAN) node, the method comprising:
sending first information indicating whether a first cell of the RAN node overlaps at least partially with a no-transmission zone (NTZ) for aerial UEs to a neighboring RAN node; and
receiving second information indicating whether a second cell of the neighboring RAN node overlaps at least partially with the NTZ from the neighboring RAN node.

### (Supplementary Note 82)

A program for causing a computer to perform a method for an aerial User Equipment (UE), the method comprising:
sending first information indicating whether a first cell of the RAN node overlaps at least partially with a no-transmission zone (NTZ) for aerial UEs to a neighboring RAN node; and
receiving second information indicating whether a second cell of the neighboring RAN node overlaps at least partially with the NTZ from the neighboring RAN node.

### (Supplementary Note 83)

A central unit of a radio access network (RAN) node, comprising:
means for sending, to a first distributed unit of the RAN node, first information indicating whether a first cell provided by the first distributed unit overlaps at least partially with a no-transmission zone (NTZ) for aerial UEs.

### (Supplementary Note 84)

The central unit according to Supplementary Note 83, wherein the means for sending is adapted to send the first information via an F1 SETUP RESPONSE, GNB-DU CONFIGURATION UPDATE ACKNOWLEDGE, or GNB-CU CONFIGURATION UPDATE message.

### (Supplementary Note 85)

The central unit according to Supplementary Note 83 or 84, wherein the means for sending is adapted to send, to the first distributed unit, second information indicating whether a second cell provided by a second distributed unit, different from the first distributed unit, overlaps at least partially with the NTZ.

### (Supplementary Note 86)

A distributed unit of a radio access network (RAN) node, comprising:
means for receiving, from a central unit of the RAN node, first information indicating whether a first cell provided by the distributed unit overlaps at least partially with a no-transmission zone (NTZ) for aerial UEs.

### (Supplementary Note 87)

The distributed unit according to Supplementary Note 86, wherein the means for receiving is adapted to receive the first information via an F1 SETUP RESPONSE, GNB-DU CONFIGURATION UPDATE ACKNOWLEDGE, or GNB-CU CONFIGURATION UPDATE message.

### (Supplementary Note 88)

The distributed unit according to Supplementary Note 86 or 87, wherein the means for receiving is adapted to receive, from the central unit, second information indicating whether a second cell provided by another distributed unit overlaps at least partially with the NTZ.

### (Supplementary Note 89)

A method performed by a central unit of a radio access network (RAN) node, the method comprising:
sending, to a first distributed unit of the RAN node, first information indicating whether a first cell provided by the first distributed unit overlaps at least partially with a no-transmission zone (NTZ) for aerial UEs.

### (Supplementary Note 90)

A method performed by a distributed unit of a radio access network (RAN) node, the method comprising:
receiving, from a central unit of the RAN node, first information indicating whether a first cell provided by the distributed unit overlaps at least partially with a no-transmission zone (NTZ) for aerial UEs.

### (Supplementary Note 91)

A program for causing a computer to perform a method for a central unit of a radio access network (RAN) node, the method comprising:
sending, to a first distributed unit of the RAN node, first information indicating whether a first cell provided by the first distributed unit overlaps at least partially with a no-transmission zone (NTZ) for aerial UEs.

### (Supplementary Note 92)

A program for causing a computer to perform a method for a distributed unit of a radio access network (RAN) node, the method comprising:
receiving, from a central unit of the RAN node, first information indicating whether a first cell provided by the distributed unit overlaps at least partially with a no-transmission zone (NTZ) for aerial UEs.

### (Supplementary Note 93)

A central unit of a radio access network (RAN) node, comprising:
means for receiving, from a first distributed unit of the RAN node, first information indicating whether a first cell provided by the first distributed unit overlaps at least partially with a no-transmission zone (NTZ) for aerial UEs.

### (Supplementary Note 94)

The central unit according to Supplementary Note 93, wherein the means for receiving is adapted to receive the first information via an F1 SETUP REQUEST or GNB-DU CONFIGURATION UPDATE message.

### (Supplementary Note 95)

The central unit according to Supplementary Note 93 or 94, further comprising means for sending to a second distributed unit, different from the first distributed unit, second information indicating whether or not the first cell of the first distributed unit overlaps at least partially with the NTZ.

### (Supplementary Note 96)

A distributed unit of a radio access network (RAN) node, comprising:
means for sending, to a central unit of the RAN node, first information indicating whether a first cell provided by the distributed unit overlaps at least partially with a no-transmission zone (NTZ) for aerial UEs.

### (Supplementary Note 97)

The distributed unit according to Supplementary Note 96, wherein the means for sending is adapted to send the first information via an F1 SETUP REQUEST or GNB-DU CONFIGURATION UPDATE message.

### (Supplementary Note 98)

The distributed unit according to Supplementary Note 96 or 97, further comprising means for receiving, from the central unit, second information indicating whether or not a second cell provided by another distributed unit overlaps at least partially with the NTZ.

### (Supplementary Note 99)

A method performed by a central unit of a radio access network (RAN) node, the method comprising:
receiving, from a first distributed unit of the RAN node, first information indicating whether a first cell provided by the first distributed unit overlaps at least partially with a no-transmission zone (NTZ) for aerial UEs.

### (Supplementary Note 100)

A method performed by a distributed unit of a radio access network (RAN) node, the method comprising:
sending, to a central unit of the RAN node, first information indicating whether a first cell provided by the distributed unit overlaps at least partially with a no-transmission zone (NTZ) for aerial UEs.

### (Supplementary Note 101)

A program for causing a computer to perform a method for a central unit of a radio access network (RAN) node, the method comprising:
receiving, from a first distributed unit of the RAN node, first information indicating whether a first cell provided by the first distributed unit overlaps at least partially with a no-transmission zone (NTZ) for aerial UEs.

### (Supplementary Note 102)

A program for causing a computer to perform a method for a distributed unit of a radio access network (RAN) node, the method comprising:
sending, to a central unit of the RAN node, first information indicating whether a first cell provided by the distributed unit overlaps at least partially with a no-transmission zone (NTZ) for aerial UEs.

This application is based upon and claims the benefit of priority from Japanese Patent Application No. 2023-139932, filed on August 30, 2023, the disclosure of which is incorporated herein in its entirety by reference.

### Reference Signs List

1 Aerial UE
2, 2A - 2G RAN node
21, 21A - 21G Cell
3 No-transmit zone (NTZ)
22 Central Unit (CU)
23, 23A - 23C Distributed Unit (DU)

## Claims

1. An aerial User Equipment (UE) comprising:
means for receiving system information via broadcast in a first cell;
means for treating the first cell as a barred cell in cell selection or cell reselection, if the system information contains first information indicating whether the first cell is barred to aerial UEs and if the first information indicates that the first cell is barred to aerial UEs;
means for not treating the first cell as a barred cell in cell selection or cell reselection, if the system information contains the first information and if the first information indicates that the first cell is not barred for aerial UEs; and
means for not treating the first cell as a barred cell in cell selection or cell reselection if the system information does not contain the first information.

2. The aerial UE according to claim 1, wherein the first cell is a cell that is included in or partially overlaps with a no-transmit zone (NTZ) for aerial UEs, and whose uplink frequency falls within a frequency band that is prohibited in the NTZ.

3. The aerial UE according to claim 2, wherein the NTZ is a geographical area where aerial UEs are not allowed to transmit in one or more specific frequency bands.

4. The aerial UE according to any one of claims 1 to 3, wherein the system information is System Information Block type 1 (SIB1).

5. The aerial UE according to any one of claims 1 to 4, further comprising means for receiving in the first cell an excluded cell list specific to aerial UEs,
wherein the excluded cell list indicates one or more neighbor cells to be excluded from candidate cells for cell reselection by aerial UEs.

6. The aerial UE according to claim 2 or 3, further comprising means for receiving, in the first cell, geographical information for defining geographical extent of the NTZ.

7. The aerial UE according to claim 2, 3, or 6, further comprising means for receiving, in the first cell, information indicating one or more frequency bands in which transmission by aerial UEs is not allowed in the NTZ.

8. A method performed by an aerial User Equipment (UE), the method comprising:
receiving system information via broadcast in a first cell;
treating the first cell as a barred cell in cell selection or cell reselection, if the system information contains first information indicating whether the first cell is barred to aerial UEs and if the first information indicates that the first cell is barred to aerial UEs;
not treating the first cell as a barred cell in cell selection or cell reselection, if the system information contains the first information and if the first information indicates that the first cell is not barred for aerial UEs; and
not treating the first cell as a barred cell in cell selection or cell reselection if the system information does not contain the first information.

9. A program for causing a computer to perform a method for an aerial User Equipment (UE), the method comprising:
receiving system information via broadcast in a first cell;
treating the first cell as a barred cell in cell selection or cell reselection, if the system information contains first information indicating whether the first cell is barred to aerial UEs and if the first information indicates that the first cell is barred to aerial UEs;
not treating the first cell as a barred cell in cell selection or cell reselection, if the system information contains the first information and if the first information indicates that the first cell is not barred for aerial UEs; and
not treating the first cell as a barred cell in cell selection or cell reselection if the system information does not contain the first information.

10. An aerial User Equipment (UE) comprising:
means for receiving first information via broadcast in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

11. The aerial UE according to claim 10, wherein the NTZ is a geographical area where aerial UEs are not allowed to transmit in one or more specific frequency bands.

12. The aerial UE according to claim 10 or 11, wherein the first information is contained in a System Information Block type 1 (SIB1) broadcast in the first cell.

13. The aerial UE according to any one of claims 10 to 12, further comprising means for receiving in the first cell a neighbor cell list specific to aerial UEs,
wherein each of one or more cells included in the neighbor cell list is a cell belonging to or containing an NTZ; a cell where uplink transmission is not permitted to aerial UEs; or a cell that provides downlink communication services to aerial UEs but does not provide uplink communication services to aerial UEs.

14. The aerial UE according to any one of claims 10 to 13, further comprising means for receiving, in the first cell, geographical information for defining geographical extent of the NTZ.

15. The aerial UE according to any one of claims 10 to 14, further comprising means for receiving, in the first cell, information indicating one or more frequency bands in which transmission by aerial UEs is not allowed in the NTZ.

16. A radio access network (RAN) node comprising:
means for broadcasting first information in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

17. A method performed by an aerial User Equipment (UE), the method comprising:
receiving first information via broadcast in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

18. A method performed by a radio access network (RAN) node, the method comprising:
broadcasting first information in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

19. A program for causing a computer to perform a method for an aerial User Equipment (UE), the method comprising:
receiving first information via broadcast in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

20. A program for causing a computer to perform a method for a radio access network (RAN) node, the method comprising:
broadcasting first information in a first cell, the first information indicating that the first cell belongs to or contains a no-transmission zone (NTZ) for aerial UEs; that uplink transmission in the first cell is not allowed for aerial UEs; or that the first cell provides downlink communication services to aerial UEs but does not provide uplink communication services to aerial UEs.

21. An aerial User Equipment (UE) comprising:
means for receiving in a first cell an excluded cell list specific to aerial UEs,
wherein the excluded cell list indicates one or more neighbor cells to be excluded from candidate cells for cell reselection by aerial UEs.

22. The aerial UE according to claim 21, wherein each of one or more cells contained in the excluded cell list is a cell that is included in or partially overlaps with a no-transmit zone (NTZ) for aerial UEs, and whose uplink frequency falls within a frequency band that is prohibited in the NTZ.

23. The aerial UE according to claim 22, wherein the NTZ is a geographical area where aerial UEs are not allowed to transmit in one or more specific frequency bands.

24. A radio access network (RAN) node comprising:
means for transmitting in a first cell an excluded cell list specific to aerial UEs,
wherein the excluded cell list indicates one or more neighbor cells to be excluded from candidate cells for cell reselection by aerial UEs.

25. A method performed by an aerial User Equipment (UE), the method comprising:
receiving in a first cell an excluded cell list specific to aerial UEs,
wherein the excluded cell list indicates one or more neighbor cells to be excluded from candidate cells for cell reselection by aerial UEs.

26. A method performed by a radio access network (RAN) node, the method comprising:
transmitting in a first cell an excluded cell list specific to aerial UEs,
wherein the excluded cell list indicates one or more neighbor cells to be excluded from candidate cells for cell reselection by aerial UEs.

27. A program for causing a computer to perform a method for an aerial User Equipment (UE), the method comprising:
receiving in a first cell an excluded cell list specific to aerial UEs,
wherein the excluded cell list indicates one or more neighbor cells to be excluded from candidate cells for cell reselection by aerial UEs.

28. A program for causing a computer to perform a method for a radio access network (RAN) node, the method comprising:
transmitting in a first cell an excluded cell list specific to aerial UEs,
wherein the excluded cell list indicates one or more neighbor cells to be excluded from candidate cells for cell reselection by aerial UEs.

29. An aerial User Equipment (UE) comprising:
means for receiving in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

30. The aerial UE according to claim 29, wherein the NTZ is a geographical area where aerial UEs are not allowed to transmit in one or more specific frequency bands.

31. A radio access network (RAN) node comprising:
means for transmitting in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

32. The RAN node according to claim 31, wherein the NTZ is a geographical area where aerial UEs are not allowed to transmit in one or more specific frequency bands.

33. A method performed by an aerial User Equipment (UE), the method comprising:
receiving in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

34. A method performed by a radio access network (RAN) node, the method comprising:
transmitting in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

35. A program for causing a computer to perform a method for an aerial User Equipment (UE), the method comprising:
receiving in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

36. A program for causing a computer to perform a method for a radio access network (RAN) node, the method comprising:
transmitting in a first cell a neighbor cell list specific to aerial UEs,
wherein each of one or more cells included in the neighbor cell list is a cell belonging to or containing a no-transmission zone (NTZ) for aerial UEs; a cell where uplink transmission is not permitted to aerial UEs; or a cell that provides downlink communication services to aerial UEs but does not provide uplink communication services to aerial UEs.

37. A radio access network (RAN) node comprising:
means for sending first information indicating whether a first cell of the RAN node overlaps at least partially with a no-transmission zone (NTZ) for aerial UEs to a neighboring RAN node, and for receiving second information indicating whether a second cell of the neighboring RAN node overlaps at least partially with the NTZ from the neighboring RAN node.

38. The RAN node according to claim 37, further comprising means for determining a target cell for a handover of an aerial UE, considering the second information.

39. The RAN node according to claim 38, further comprising means for transmitting a message to the aerial UE to release a Radio Resource Control (RRC) connection of the aerial UE if the target cell cannot be selected,
wherein the message indicates to the aerial UE that a cause of the release of the RRC connection is entry into the NTZ.

40. The RAN node according to any one of claims 37 to 39, further comprising:
means for generating an excluded cell list specific to aerial UEs, taking into account the second information; and
means for broadcasting the excluded cell list in the first cell,
wherein the excluded cell list indicates one or more neighbor cells to be excluded from candidate cells for cell reselection by aerial UEs.

41. The RAN node according to claim 40, wherein the means for generating is adapted to include in the excluded cell list a cell that overlaps at least partially with the NTZ, and whose uplink frequency falls within a frequency band that is prohibited in the NTZ.

42. The aerial UE according to any one of claims 37 to 41, wherein the NTZ is a geographical area where aerial UEs are not allowed to transmit in one or more specific frequency bands.

43. A method performed by a radio access network (RAN) node, the method comprising:
sending first information indicating whether a first cell of the RAN node overlaps at least partially with a no-transmission zone (NTZ) for aerial UEs to a neighboring RAN node; and
receiving second information indicating whether a second cell of the neighboring RAN node overlaps at least partially with the NTZ from the neighboring RAN node.

44. A program for causing a computer to perform a method for an aerial User Equipment (UE), the method comprising:
sending first information indicating whether a first cell of the RAN node overlaps at least partially with a no-transmission zone (NTZ) for aerial UEs to a neighboring RAN node; and
receiving second information indicating whether a second cell of the neighboring RAN node overlaps at least partially with the NTZ from the neighboring RAN node.

45. A central unit of a radio access network (RAN) node, comprising:
means for sending, to a first distributed unit of the RAN node, first information indicating whether a first cell provided by the first distributed unit overlaps at least partially with a no-transmission zone (NTZ) for aerial UEs.

46. The central unit according to claim 45, wherein the means for sending is adapted to send, to the first distributed unit, second information indicating whether a second cell provided by a second distributed unit, different from the first distributed unit, overlaps at least partially with the NTZ.

47. A distributed unit of a radio access network (RAN) node, comprising:
means for receiving, from a central unit of the RAN node, first information indicating whether a first cell provided by the distributed unit overlaps at least partially with a no-transmission zone (NTZ) for aerial UEs.

48. A method performed by a central unit of a radio access network (RAN) node, the method comprising:
sending, to a first distributed unit of the RAN node, first information indicating whether a first cell provided by the first distributed unit overlaps at least partially with a no-transmission zone (NTZ) for aerial UEs.

49. A method performed by a distributed unit of a radio access network (RAN) node, the method comprising:
receiving, from a central unit of the RAN node, first information indicating whether a first cell provided by the distributed unit overlaps at least partially with a no-transmission zone (NTZ) for aerial UEs.

50. A program for causing a computer to perform a method for a central unit of a radio access network (RAN) node, the method comprising:
sending, to a first distributed unit of the RAN node, first information indicating whether a first cell provided by the first distributed unit overlaps at least partially with a no-transmission zone (NTZ) for aerial UEs.

51. A program for causing a computer to perform a method for a distributed unit of a radio access network (RAN) node, the method comprising:
receiving, from a central unit of the RAN node, first information indicating whether a first cell provided by the distributed unit overlaps at least partially with a no-transmission zone (NTZ) for aerial UEs.

52. A central unit of a radio access network (RAN) node, comprising:
means for receiving, from a first distributed unit of the RAN node, first information indicating whether a first cell provided by the first distributed unit overlaps at least partially with a no-transmission zone (NTZ) for aerial UEs.

53. A distributed unit of a radio access network (RAN) node, comprising:
means for sending, to a central unit of the RAN node, first information indicating whether a first cell provided by the distributed unit overlaps at least partially with a no-transmission zone (NTZ) for aerial UEs.

54. A method performed by a central unit of a radio access network (RAN) node, the method comprising:
receiving, from a first distributed unit of the RAN node, first information indicating whether a first cell provided by the first distributed unit overlaps at least partially with a no-transmission zone (NTZ) for aerial UEs.

55. A method performed by a distributed unit of a radio access network (RAN) node, the method comprising:
sending, to a central unit of the RAN node, first information indicating whether a first cell provided by the distributed unit overlaps at least partially with a no-transmission zone (NTZ) for aerial UEs.

56. A program for causing a computer to perform a method for a central unit of a radio access network (RAN) node, the method comprising:
receiving, from a first distributed unit of the RAN node, first information indicating whether a first cell provided by the first distributed unit overlaps at least partially with a no-transmission zone (NTZ) for aerial UEs.

57. A program for causing a computer to perform a method for a distributed unit of a radio access network (RAN) node, the method comprising:
sending, to a central unit of the RAN node, first information indicating whether a first cell provided by the distributed unit overlaps at least partially with a no-transmission zone (NTZ) for aerial UEs.
